(19) Europäisches Patentamt
European Patent Office
Office européen des brevets

(11) EP 4 703 337 A1

(12) **EUROPEAN PATENT APPLICATION**
published in accordance with Art. 153(4) EPC

(43) Date of publication:
**04.03.2026 Bulletin 2026/10**

(21) Application number: **24797069.2**

(22) Date of filing: **24.04.2024**

(51) International Patent Classification (IPC):
***C04B 35/486*** *(2006.01)*

(52) Cooperative Patent Classification (CPC):
**C04B 35/486**

(86) International application number:
**PCT/JP2024/016093**

(87) International publication number:
**WO 2024/225323 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.04.2023 JP 2023070908**

(71) Applicant: **Nakashima Sangyo Co., Ltd.**
**Seto-shi, Aichi 489-0037 (JP)**

(72) Inventor: **NAKASHIMA Mikio**
**Seto-shi, Aichi 489-0037 (JP)**

(74) Representative: **AWA Sweden AB**
**Matrosgatan 1**
**Box 5117**
**200 71 Malmö (SE)**

# (54) ZIRCONIA SINTERED BODY

(57) To provide a zirconia sintered body that can achieve both transparency and fracture toughness at a high level and can be easily produced by pressureless sintering. The $Y_2O_3$ content in the entire composition of the sintered body is 2.5 mol% or greater and 6 mol% or less, the remainder is configured by $ZrO_2$ and inevitable impurities, the area average grain size of zirconia crystal grains is 0.4 μm or greater and 0.9 μm or less, the area ratio of a first region having a grain size of 0.1 μm or greater and less than 0.5 μm is 5% or greater and 80% or less, the area ratio of a second region having a grain size of 0.8 μm or greater and less than 2 μm is 5% or greater and 80% or less, the area ratio of a third region having a grain size of 0.5 μm or greater and less than 0.8 μm is 10% or greater and less than 55%, an average $Y_2O_3$ concentration of zirconia crystal grains configuring the second region is 3.5 mol% or greater and 7.0 mol% or less, and an average $Y_2O_3$ concentration Cl of zirconia crystal grains configuring the first region is 1.7 mol% or greater and 5 mol% or less.

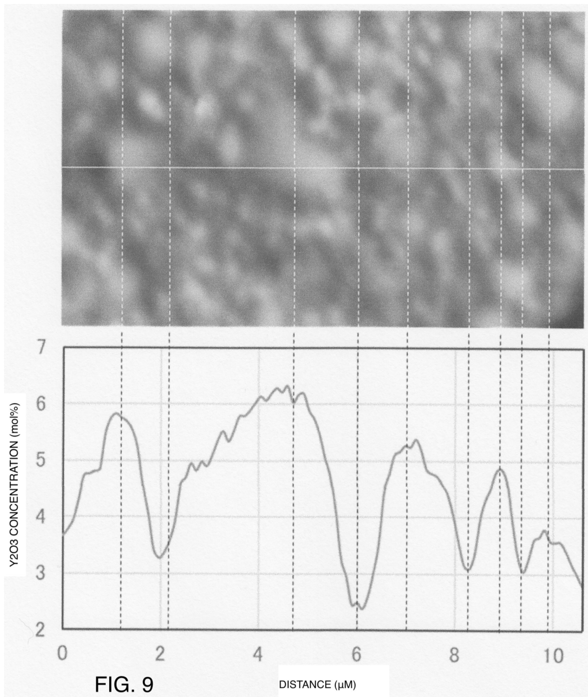

FIG. 9

EP 4 703 337 A1

## Description

BACKGROUND OF THE INVENTION

1. Field of the Invention

This invention relates to a zirconia sintered body with an excellent fracture toughness value and excellent transmission characteristics of visible light.

2. Description of Related Art

As shown in FIG. 9 of non-patent document 1 (cited herein as FIG. 15), pure zirconium oxide ($ZrO_2$) exhibits polymorphs at high temperatures, including the $CaF_2$-type cubic crystal phase (C phase), tetragonal crystal phase (T phase), and monoclinic crystal phase (M phase). When a stabilizer such as yttrium oxide ($Y_2O_3$) or calcium oxide (CaO) is added at 2 to 5 mol%, a partially stabilized zirconia (PSZ) containing a T phase metastable at room temperature is formed. When the stabilizer of 8 mol% or greater is added, C phase, or fully stabilized zirconia (FSZ) is formed. The excellent mechanical properties of PSZ have been attributed to martensitic transformation from T phase as the high-temperature phase to M layer as the low-temperature phase. As cracks develop within the PSZ sintered body, the stress causes a transformation from the T phase to the M phase, which results in a volume expansion of about 4%. This expansion applies compressive stress to the crack tip and suppresses crack development (hereinafter, toughening of the zirconia sintered body by this mechanism is referred to as "transformation toughening"). Especially, PSZ with $Y_2O_3$ as a stabilizer is chemically stable and has high strength and toughness, and is widely used as engine materials, cutting tools, dies, sealing materials, bearings and other machine structural materials, dental bone materials and other biomaterials.

In this regard, industrial products in which zirconia sintered bodies made of PSZ (hereinafter, referred to simply as "zirconia sintered bodies" in the description) are used may need a certain degree of transparency from the viewpoint of improving appearance and aesthetics. Such industrial products may include, for example, dental materials, accessories, and other decorative products. For example, in the case of dental materials, if the transparency of the zirconia sintered body used is too low, it is not suitable since the esthetic appearance is compromised due to a large discrepancy in appearance from the actual teeth.

The zirconia sintered body disclosed in patent document 1 has a composition of 5 mol% $Y_2O_3$, which stabilizes the C phase greater, and a sintered body manufactured by the HIP method with less air bubble residue is disclosed. Total light transmittance measured at a sample thickness of 1 mm is as high as 41 to 46%. The sample thickness used for measuring the total light transmittance is mixed between 0.5 mm and 1.0 mm depending on the document, whereas FIG. 3 of non-patent document 2 discloses values of total light transmittance of various zirconia sintered body products when the sample thickness is varied from 0.5 mm to 1.5 mm. With reference thereto, the total light transmittance of a sample having a thickness of 0.5 mm can be estimated by multiplying by a coefficient of 1.21 the total light transmittance value of a sample having a thickness of 1.0 mm. The numerical values of the total optical transmittance disclosed in patent document 2 are considered to be high, ranging from 49.6 to 55.7% for a sample thickness of 0.5 mm. In contrast, the flexural strength of the sintered body is approximately 800 MPa to 1100 MPa, and the fracture toughness value is approximately 3.5 to 4.0 $MPa\cdot m^{0.5}$. Patent document 2 further discloses that the average crystal grain size of the sintered body measured by the line intercept method is approximately 0.49 to 0.95 $\mu$m. The raw material powder used has an average particle size of 0.028 to 0.030 $\mu$m and a specific surface area of 15 to 16 $m^2/g$, indicating its fine nature.

Patent document 2 discloses a zirconia sintered body of 1.6 to 2 mol% $Y_2O_3$ composition, which is produced by employing the HIP method. The composition adopted features a higher T phase content, which contributes to the high toughness transformation. Consequently, the sintered body exhibits high strength and toughness with flexural strength ranging from 1470 MPa to 2140 MPa and fracture toughness values from 6.0 to 10.3 $MPa\cdot m^{0.5}$. However, the total light transmittance measured at a sample thickness of 1 mm is 27 to 34% (estimated to be 32.7 to 41.2% when converted to a sample thickness of 0.5 mm), which is lower than those in patent documents 1 to 3. The average grain size of the sintered body measured by the planimetric method is 0.28 to 0.55 $\mu$m. The raw material powder used has a bimodal distribution with peaks at 0.14 $\mu$m and 0.34 to 0.35 $\mu$m, a median diameter of 0.15 to 0.18 $\mu$m, and a specific surface area value of 15.1 to 17.9 $m^2/g$ (with respect to the powders of Synthesis Examples 3 and 6 having specific surface area values of 10.3 $m^2/g$ and 11.6 $m^2/g$, respectively, evaluation of the total light transmittance of the sintered body has not been conducted)."

Patent document 3 discloses a zirconia sintered body mainly of 3 mol% $Y_2O_3$ composition, which is produced by employing the pressureless sintering method. The total light transmittance measured at a sample thickness of 1 mm is high at 34 to 40% (the equivalent value for a sample thickness of 0.5 mm is estimated to be 41.2 to 48.4%). Further, the flexural strength of the sintered body is 980 to 1280 MPa. The average crystal grain size of the sintered body measured by the planimetric method is 0.30 to 0.34 $\mu$m. The raw material powder used has an average particle size of 0.4 to 0.7 $\mu$m and a specific surface area of 11 to 15 $m^2/g$. The raw material powder used has an average particle size of 0.4 to 0.7 $\mu$m and a

specific surface area of 11 to 15 $m^2/g$.

Patent document 4 discloses a zirconia sintered body mainly of 4 mol% $Y_2O_3$ composition, which is produced by employing the pressureless sintering method. The flexural strength of the sintered body is 1016 to 1220 MPa, which is increased to the same level as that of patent document 3 with lower $Y_2O_3$ content. Further, the fracture toughness value is relatively excellent at approximately 4.0 to 4.5 $MPa{\cdot}m^{0.5}$, but the total light transmittance measured at a sample thickness of 0.5 mm is around 28 to 30%. Regarding the powder used, the specific surface area value is not disclosed. However, according to the description, paragraph [0043], the particle size distribution of the zirconia crystal particles in the raw material powder exhibits at least two peaks. In this particle size distribution, the first peak is preferably located between 0.05 μm and 0.11 μm (fine-particle powder), and the second peak is preferably located between 0.1 μm and 0.7 μm (large-particle powder). As a specific example, an equal mixture of a small-particle powder with a peak at 0.08 μm and a large-particle powder with a peak at 0.4 μm is employed. The raw material is considered to be similar in concept to the bimodal distribution raw material powder disclosed in patent document 2.

Further, patent document 4 discloses that the crystal grain size distribution is analyzed using SEM observation images of the sintered body. In the circular equivalent grain size distribution of each crystal grain observed in the images, the cross-sectional area fraction of zirconia grains in the class below 0.4 μm is 4% or greater and 35% or less, the cross-sectional area ratio of zirconia grains in the class of 0.4 μm or greater and less than 0.76 μm is 24% or greater and 57% or less, and the cross-sectional area fraction of zirconia grains in the class of 0.76 μm or greater is preferably 16% or greater and 62% or less. Although the value of the average crystal grain size is not disclosed, it is estimated from the area ratio of crystal grains of each class that the value is in the range of 0.06 to 0.085 μm. A summary of the disclosures in each of the above patent documents will be summarized in Table 1.

Table 1

| | Patent Document 1 | Patent Document 2 | Patent Document 3 | Patent Document 4 |
|---|---|---|---|---|
| $Y_2O_3$ Content (mol%) | 5.0 | 1.6-2.0 | 3.0 | 4.0 |
| Total light transmittance (%) (t = 0.5 mm) | 49.6-55.7 | 32.7-41.2 | 41.2-48.4 | 28-30 |
| Flexural Strength (MPa) | 800-1100 | 1470-2140 | 980-1280 | 1016-1220 |
| Fracture toughness ($MPa{\cdot}m^{0.s}$) | 3.5-40 | 6.0-10.3 | Not disclosed | 4.0-4.5 |
| Sintered body Average Crystal Particle Diameter ($\mu m$) | 0.49-0.95 | 0.28-0.55 | 0.3-0.34 | 0.06-0.085 |
| Raw Material Powder Average Crystal Particle Diameter ($\mu m$) | 0.028-0.030 | 0.14/0.35 Bimodal | 0.4-0.7 | 0.08/0.40 Bimodal |
| Raw Material Powder Specific Surface Area Value ($m^2/g$) | 15.0-16.0 | 15.1-17.9 | 11.0-15.0 | Not disclosed |
| Sintering Method | I HIP I | HIP I | Pressureless Sintering I | Pressureless Sintering |

Prior Art Documents

Patent Documents

Patent Document 1: Japanese Laid-Open Patent Publication No. 2008-222450
Patent Document 2: Japanese Laid-Open Patent Publication No. 2022-008052
Patent Document 3: Japanese Laid-Open Patent Publication No. 2010-150063
Patent Document 4: Japanese Laid-Open Patent Publication No. 2018-165243

Non-patent documents

Non-Patent Document 1: "State Diagram and Microstructure of Y2O3 Doped Partially Stabilized ZrO2" (Journal of the Japan Institute of Metals Vol. 50 No. 12 (1986) pp. 1101-1108)

Non-Patent Document 2: "Evaluation of Physical Properties of Ultra-Translucent Zirconia" (Proceedings of the 33rd Annual Meeting of the Japanese Academy of Clinical Dentistry, P-34 (2017))
Non-Patent Document 3: "Fracture Toughness Evaluation of Zirconia (Y-TZP) by SEVNB and IF Methods" (Ann Jpn Prosthodont Soc 5: PP. 165-173, 2013)
Non-Patent Document 4: "Fracture Toughness Test Method for Ceramics by Indentation Fracture (IF) Method" (Synthesiology Vol.13 No.1 (2021) PP. 29-44)
Non-Patent Document 5: "Sintering Mechanism of Yttria Stabilized Zirconia: Effect of Yttrium Ion(III) Segregation at Grain Boundaries" (TOSOH Research & Technology Review Vol. 55 (2011) pp. 7-18)
Non-Patent Document 6: "Spinodal Decomposition of Ceramics" (Iron and Steel No. 73 (1987) No. 11, pp. 1453-1460)

## SUMMARY OF THE INVENTION

### Problems to be Solved by the Invention

To improve the mechanical properties of zirconia sintered body, it is considered effective to reduce the $Y_2O_3$ content to increase the T phase ratio, which contributes to transformation toughness, and to refine the crystal grain size of the sintered body. In contrast, to enhance transparency, it is considered effective to increase the proportion of crystal grains grown to a size greater than the visible light wavelength and simultaneously reduce the proportion of fine crystal grains that cause light scattering, as well as stabilize the C phase by increasing the $Y_2O_3$ content, thereby limiting the formation of fine crystalline domains of the T phase or M phase within the grown crystal grains.

However, as is clear from a comparison of the disclosures in patent documents 1 through 3 as shown in Table 1, a trade-off may often be seen between transparency and mechanical properties such as strength and fracture toughness in the zirconia sintered body, and improving both at the same time has been hard. In contrast, although the description, paragraph [0071] of patent document 4 describes "The grain size distribution balance or area balance is considered to contribute to enhancing flexural strength, fracture toughness, and phase transition limitation," based on the disclosed characteristic values, it may be hard to recognize that transparency and mechanical properties (especially, fracture toughness values) are simultaneously achieved at a high level. For example, as shown in FIG. 30, although the total light transmittance values of patent document 4 tend to increase as the area fraction of crystal grains of 0.76 μm or greater increases, the rate of increase in light transmittance relative to the area fraction is not especially high. As shown in FIG. 31, fracture toughness values exhibit almost no correlation with the area fraction of the crystal grains less than 0.4 μm, indicating that the grain refinement does not necessarily contribute to improved fracture toughness.

Since the HIP method needs large-scale equipment, it is preferable, for applications such as dental materials, to employ a simpler pressureless sintering method. However, as is apparent from the disclosures of patent documents 3 and 4, the problem that the mechanical properties of zirconia sintered bodies obtained by pressureless sintering are significantly inferior to those of zirconia sintered bodies obtained by the HIP method has been recognized. Accordingly, a zirconia sintered body in which mechanical properties and light transmittance are achieved at a high level and which can be embodied by pressureless sintering has been especially desired.

Even though flexural strength and fracture toughness have the same mechanical properties, they have a trade-off relationship as mentioned in the description, paragraph [0010] of patent document 4, and increasing both flexural strength and fracture toughness is also hard. For example, a two-dimensional plot of the flexural strength and fracture toughness values disclosed in patent documents 1, 2, and 3, respectively, is shown in FIG. 32, and clear correlation between these two properties cannot be recognized. The data points circled by a dashed line in FIG. 32 denote the values for the sintered bodies of patent documents 1 and 2, which are produced using the HIP method, and it appears that the flexural strength and fracture toughness values are indeed negatively correlated for these sintered bodies. However, the remaining data points for sintered bodies produced using the pressureless sintering method deviate significantly from the data points for the sintered bodies produced using the HIP method, indicating that flexural strength and fracture toughness values cannot be ascertained through a single correlation trend.

According to non-patent document 4, fracture of brittle materials occurs when stress concentrates to form cracks, which grow rapidly and cause failure. This rapid crack growth is referred to as unstable fracture, In contrast, the case in which fracture is achieved with crack propagation being controlled under slowly applied stress as in a flexural strength test is referred to as stable fracture. As mentioned above, when a crack propagates in the zirconia sintered body, the stress concentrated on the crack tip causes martensitic transformation of the T phase around the tip to M phase, and the compressive stress caused by the volume expansion due to this transformation limits the crack propagation. The phenomenon in which crack propagation overcomes the compressive stress corresponds to the unstable fracture, and the fracture toughness value refers to the critical stress intensity factor at which the unstable fracture begins. In contrast, when the mode shifts to the unstable fracture, the sintered body is unable to control the crack propagation, leading to fracture, and the majority of phase transformation during flexural strength tests is considered to occur at stable fracture.

As described above, it should also be noted that the mode of involvement of phase transformation in the test values is fundamentally different between fracture toughness tests and flexural strength tests, and that it is in principle impossible to estimate fracture toughness values from disclosed values of flexural strength tests when the results of fracture toughness tests are not disclosed as in patent document 3, for example.

An object of the present invention is to provide a zirconia sintered body that is capable of achieving both transparency and fracture toughness values at a high level and being easily produced by pressureless sintering by improving the crystal structure in consideration of the distribution of $Y_2O_3$ component as a stabilizer.

Means to Solve the Problems

In order to solve the above problem, a zirconia sintered body according to the present invention has a relative density of 99% or greater, in which a $Y_2O_3$ content in a total composition of the zirconia sintered body is 2.5 mol% or greater and 6 mol% or less, and a remainder configured by $ZrO_2$ and unavoidable impurities, and in an electron microscopic observation image of a microstructure of the sintered body, an area-averaged grain size of zirconia crystal grains is 0.4 μm or greater and 0.9 μm or less, an area ratio of zirconia crystal grains with a grain size of less than 0.1 μm and an area ratio of zirconia crystal grains with a grain size exceeding 2 μm are both less than 1%, an area ratio of a first region configured by zirconia crystal grains with a grain size of 0.1 μm or greater and less than 0.5 μm is 5% or greater and 80% or less, an area ratio of a second region configured by zirconia crystal grains with a grain size of 0.8 μm or greater and less than 2 μm is 5% or greater and 80% or less, an area ratio of a third region configured by zirconia crystal grains with a grain size of 0.5 μm or greater and less than 0.8 μm is 10% or greater and less than 55%, an average $Y_2O_3$ concentration C2 of the zirconia crystal grains forming the second region is 3.5 mol% or greater and 7.0 mol% or less, an average $Y_2O_3$ concentration C1 of the zirconia crystal grains forming the first region is 1.7 mol% or greater and 5 mol% or less, and when a difference in the $Y_2O_3$ concentrations is denoted as $\Delta C \equiv C2-C1$, a value of $\Delta C/C2$ is 0.2 or greater and 0.5 or less, and a fracture toughness value measured by IF method is 4.5 $MPa \cdot m^{0.5}$ or greater and 12 $MPa \cdot m^{0.5}$ or less. Advantageous Effects of the Invention

The composition of the zirconia sintered body according to the present invention allows both transparency and fracture toughness values to be achieved at a high level, and also allows the sintered body to be readily produced by pressureless sintering.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 shows a histogram illustrating a powder particle size distribution (on a volume basis), as measured by a laser scattering particle size analyzer, of a sintering raw material powder having a $Y_2O_3$ concentration of 4.5 mol% used for producing zirconia sintered body test specimens according to an example, along with its statistical characteristic values,

FIG. 2 shows a histogram illustrating a powder particle size distribution (on a volume basis), as measured by a laser scattering particle size analyzer, of a sintering raw material powder having a $Y_2O_3$ concentration of 4.5 mol% used for producing zirconia sintered body test specimens according to a comparative example, along with its statistical characteristic values,

FIG. 3 shows a scanning electron microscopic observation image (at a magnification of 10,000) of a zirconia sintered body (example product) of No. 10 in Table 1 produced by pressureless sintering in air at 1500°C for 2 hours using the sintering raw material powder of FIG. 1,

FIG. 4 shows a scanning electron microscopic observation image (at a magnification of 10,000) of a zirconia sintered body (comparative example product) of No. 22 in Table 1 produced by pressureless sintering in air at 1500°C for 2 hours using the sintering raw material powder of FIG. 2,

FIG. 5 shows a diagram illustrating an example of setting a crystal grain sampling line on the observation image of FIG. 3 along with the measurement concept of crystal grain size,

FIG. 6 shows a diagram illustrating representative crystal grains in the first region and crystal grains in the second region observed in the observation image of FIG. 3, marked along with an example of setting $Y_2O_3$ concentration analysis circles,

FIG. 7 shows a histogram illustrating a microstructural grain size distribution (on an area basis) analyzed using the observation image of FIG. 3 for the zirconia sintered body (example product) of No. 10 in Table 1,

FIG. 8 shows a histogram illustrating a microstructural grain size distribution (on an area basis) analyzed using the observation image of FIG. 4 for the zirconia sintered body (comparative example product) of No. 22 in Table 1,

FIG. 9 shows a scanning electron microscopic observation image (at a magnification of 10,000) of another field of view of the zirconia sintered body (example product) of No. 10 in Table 1 associated with EPMA line analysis results of $Y_2O_3$ concentration measured along an analysis line crossing a background region and a plurality of coarse dispersed grains in the field of view,

FIG. 10 shows an explanatory diagram schematically illustrating a process of formation of a crystal microstructure of the zirconia sintered body according to the example,

FIG. 11 shows an explanatory diagram schematically illustrating a process of formation of a crystal microstructure of a zirconia sintered body according to a conventional example,

FIG. 12 shows a diagram schematically illustrating presumed diffusion forms of Zr and Y when fine crystal grains having similar grain sizes coalesce and grow during a sintering process of the zirconia sintered body,

FIG. 13 shows a diagram schematically illustrating presumed diffusion forms, in a sintering process of a zirconia sintered body according to an embodiment using a raw material powder with a narrow particle size distribution from fine crystal particles of various sizes toward large crystal particles in contact therewith,

FIG. 14 shows a diagram schematically illustrating presumed diffusion forms, in a sintering process of a zirconia sintered body according to a conventional example using a raw material powder with a wide particle size distribution, when most of the fine crystal particles having a great particle size difference from the large crystal particles are absorbed,

FIG. 15 shows a $ZrO_2$-$Y_2O_3$ binary phase diagram disclosed in FIG. 9 of non-patent document 1,

FIG. 16 shows a scanning electron microscopic observation image (at a magnification of 10,000) of a zirconia sintered body (example product: 3 mol% $Y_2O_3$-O mol% $La_2O_3$) of No. 1 in Table 2,

FIG. 17 shows a scanning electron microscopic observation image (at a magnification of 10,000) of a zirconia sintered body (example product: 3 mol% $Y_2O_3$-0.4 mol% $La_2O_3$) of No. 3 in Table 2,

FIG. 18 shows a histogram illustrating a microstructural grain size distribution (on an area basis) analyzed using the observation image of FIG. 14 for the zirconia sintered body (example product) of No. 1 in Table 2,

FIG. 19 shows a histogram illustrating a microstructural grain size distribution (on an area basis) analyzed using the observation image of FIG. 15 for the zirconia sintered body (example product) of No. 3 in Table 2,

FIG. 20 shows a scanning electron microscopic observation image (at a magnification of 10,000) of a zirconia sintered body (example product: 4 mol% $Y_2O_3$-O mol% $La_2O_3$) of No. 5 in Table 2,

FIG. 21 shows a scanning electron microscopic observation image (at a magnification of 10,000) of a zirconia sintered body (example product: 4 mol% $Y_2O_3$-0.4 mol% $La_2O_3$) of No. 7 in Table 2,

FIG. 22 shows a histogram illustrating a microstructural grain size distribution (on an area basis) analyzed using the observation image of FIG. 18 for the zirconia sintered body (example product) of No. 5 in Table 2,

FIG. 23 shows a histogram illustrating a microstructural grain size distribution (on an area basis) analyzed using the observation image of FIG. 19 for the zirconia sintered body (example product) of No. 7 in Table 2,

FIG. 24 shows a scanning electron microscopic observation image (at a magnification of 10,000) of a zirconia sintered body (example product: 4 mol% $Y_2O_3$-O mol% $La_2O_3$) of No. 13 in Table 2,

FIG. 25 shows a scanning electron microscopic observation image (at a magnification of 10,000) of a zirconia sintered body (example product: 4 mol% $Y_2O_3$-0.4 mol% $La_2O_3$) of No. 15 in Table 2,

FIG. 26 shows a histogram illustrating a microstructural grain size distribution (on an area basis) analyzed using the observation image of FIG. 22 for the zirconia sintered body (example product) of No. 13 in Table 2,

FIG. 27 shows a histogram illustrating a microstructural grain size distribution (on an area basis) analyzed using the observation image of FIG. 23 for the zirconia sintered body (example product) of No. 15 in Table 2,

FIG. 28 shows a graph in which measured values of fracture toughness of the zirconia sintered bodies of the respective numbers in Tables 2 and 3 with respect to converted tetragonal crystal area ratio PT in a first region are plotted,

FIG. 29 shows a graph in which measured values of total light transmittance of the zirconia sintered bodies of the respective numbers in Tables 2 and 3 with respect to converted cubic crystal area ratio SC in a second region are plotted,

FIG. 30 shows a graph in which values of fracture toughness of zirconia sintered bodies disclosed in patent document 4 with respect to an area fraction of crystal grains of a size of less than 0.4 $\mu$m are plotted,

FIG. 31 shows a graph in which values of total light transmittance of zirconia sintered bodies disclosed in patent document 4 with respect to the area fraction of crystal grains of a size of 0.76 $\mu$m or greater are plotted, and

FIG. 32 shows a graph in which values of flexural strength and fracture toughness of zirconia sintered bodies disclosed in patent documents 1, 2, and 3 are plotted in two dimensions.

## DETAILED DESCRIPTION OF EMBODIMENTS

A zirconia sintered body according to an embodiment is configured such that $Y_2O_3$ content in the total composition of the sintered body is set to 2.5 mol% or greater and 6 mol% or less, with the remainder configured by

$ZrO_2$ and unavoidable impurities. When the $Y_2O_3$ content is less than 2.5 mol%, excessive T-phase formation occurs, causing the sintered body to be prone to cracking during room-temperature sintering. Further, this causes excessive grain refinement, rendering it hard to ensure transparency of the sintered body. In contrast, if the content of $Y_2O_3$ exceeds 6 mol%, the amount of T-phase formation becomes poor and excessive grain growth is likely to occur, rendering it hard to ensure the fracture toughness value of the sintered body. The $Y_2O_3$ content may desirably be 3.0 mol% or greater and 5.5 mol% or less, more preferably 3.5 mol% or greater and 5.2 mol% or less. The C phase mentioned above refers to the $CaF_2$-type cubic crystal phase, the T phase refers to the tetragonal crystal phase, and the M phase refers to the monoclinic crystal phase.

The zirconia sintered body may have a relative density of at least 99% to ensure sufficient mechanical properties. The relative density may preferably be 99.5% or greater.

In the zirconia sintered body according to the embodiment, the area average grain size of zirconia crystal grains in an electron microscopic observation image of the microstructure of the sintered body is set to be 0.4 μm or greater and 0.9 μm or less. If the area average grain size falls below 0.4 μm, rendering it hard to ensure the transparency of the sintered body. In contrast, if it exceeds 0.8 μm, the fracture toughness value of the sintered body becomes insufficient. The area average grain size of zirconia crystal grains may preferably be 0.5 μm or greater and 8 μm or less. Further, both the area ratios of the zirconia crystal grains with a grain size of less than 0.1 μm and zirconia crystal grains with a grain size exceeding 2 μm may be set to be less than 1%. If the area ratio of the zirconia crystal grains with a grain size of more than 2 μm is 1% or greater, the fracture toughness value of the sintered body becomes insufficient. Further, achieving a content of 1% or greater of zirconia crystal grains with a grain size of less than 0.1 μm is hard under pressureless sintering.

Further, the area ratio of the first region formed by the zirconia crystal grains with a grain size of 0.1 μm or greater and less than 0.5 μm is set to be 5% or greater and 80% or less, and the area ratio of the second region formed by the zirconia crystal grains with a grain size of 0.8 μm or greater and less than 2 μm is set to be 5% or greater and 80% or less. The average $Y_2O_3$ concentration of the zirconia crystal grains forming the second region is set to be 3.5 mol% or greater and 7.0 mol% or less, and the average $Y_2O_3$ concentration of the zirconia crystal grains forming the first region is set to be 1.7 mol% or greater and 5 mol% or less. The difference in the $Y_2O_3$ concentration between these regions is defined as $\Delta C \equiv C2-C1$, and the value of $\Delta C/C2$ is set to 0.2 or greater and 0.5 or less.

In the zirconia sintered body according to the embodiment, the first region configured by the zirconia crystal grains with a grain size of 0.1 μm or greater and less than 0.5 μm corresponds to a region primarily configured by fine crystal grains. An increase in the crystal grains within this region has generally been considered advantageous for improving the mechanical strength of the material. However, from the viewpoint of improving the fracture toughness, as is clear from the disclosure in patent document 4 (see FIG. 31), simply increasing the number of crystal grains in the region is not sufficient to achieve a considerable improvement in the fracture toughness. The reason for this is that if the proportion of T phase that contributes to limiting rapid crack propagation, i.e., unstable fracture, is less, even a finer crystal grain region is not considered to lead to an improvement in fracture toughness.

In contrast, the second region configured by the zirconia crystal grains with a grain size of 0.8 μm or greater and less than 2 μm corresponds to a region primarily configured by coarse crystal grains greater than the wavelength of visible light. An increase in the crystal grains in this region is considered advantageous for enhancing the effect of light scattering at the crystal grain boundaries. However, as mentioned above, even for the test specimens of the zirconia sintered body disclosed in patent document 4 where the area fraction of the crystal grains in the region has increased to approximately 60%, the total light transmittance value at a thickness of 0.5 mm is at most around 30%. Therefore, the transparency cannot be recognized to have dramatically improved. For example, at compositions around 4 mol% $Y_2O_3$ as described in patent document 4, as clearly shown in FIG. 15, the equilibrium ratio between the C phase (equilibrium $Y_2O_3$ concentration around 6.3 mol%) and the M phase (equilibrium $Y_2O_3$ concentration around 1.5 mol%) near the sintering temperature (e.g., 1500°C) is close to 1:1. This suggests that a modulated structure, configured by finely mixed high-$Y_2O_3$-concentration C-phase domains and low-$Y_2O_3$-concentration T-phase domains, is created within the crystal grains of the sintered body (see, for example, non-patent document 5 and non-patent document 6). Both domains have different $Y_2O_3$ concentrations and lattice constants, which are major light scattering factors. As a result, even though the crystal grain size itself is great, its contribution to transparency improvement is considered to be relatively small in terms of light scattering limitation at the crystal grain boundaries.

In the structure shown in patent document 4 where the first region with fine crystal grains and the second region with coarse crystal grains are mixed, little difference is considered to be present in the distribution status between the T-phase domain and C-phase domain in each region. Even though zirconia sintered body is toughened, the fracture mode is essentially brittle fracture, and cracks associated with the fracture propagate through the crystal grains. In consideration of the fact that the toughening mechanism of zirconia sintered body corresponds to the limitation of unstable fracture by martensitic transformation of the T-phase domain, a high degree of compatibility between fracture toughness values and transparency is hard to be achieved even if the ratio of the first and second regions is controlled, with no difference in the distribution of T and C phases.

The zirconia sintered body according to the embodiment is characterized in that the $Y_2O_3$ concentration in the

first region with fine crystal grains is adjusted to a certain level lower than the $Y_2O_3$ concentration in the second region with coarse crystal grains. This configuration embodies a zirconia sintered body with both transparency and fracture toughness value at a high level. If the histology is considered, the mechanism is presumed to be as follows.

That is, the difference in the $Y_2O_3$ concentration between the first region with fine crystal grains and the second region with coarse crystal grains, as described above, causes a large difference in the distribution status of the T-phase domains and C-phase domains in the second region and the first region. Specifically, the ratio of T phase, which contributes to toughening by the transformation to the M phase, is greater in the first region with the low $Y_2O_3$ concentration and lower in the second region with the high $Y_2O_3$ concentration. In contrast, the ratio of stable C phase, which does not transform to the M phase, is greater in the second region with the high $Y_2O_3$ concentration and lower in the first region with the low $Y_2O_3$ concentration. In the second region with the high $Y_2O_3$ concentration, the C-phase ratio with high phase stability increases. This reduces T-phase domain boundaries and also causes the materials to be less susceptible to the influence of strain fields caused by the martensitic transformation into the T-phase. Consequently, light scattering becomes less likely to occur, significantly contributing to enhanced light transmittance. Accordingly, with the second region of such a structure, the transparency of the sintered body can be considerably improved by increasing its area ratio.

In contrast, the crack propagation within the sintered body is relatively easy within the coarse grains of the second region where the T-phase domain density is low. However, if the crack tip reaches the fine grains in the surrounding first region, the probability of crack growth being stopped by martensitic transformation of the T phase is higher due to the higher T-phase domain density in the first region. As a result, even if the area ratio of the second region is increased to some extent to improve the transparency, the fracture toughness value is less likely to be lost because the crystal grains in the first region, which have a large crack propagation prevention effect, are dispersed at an appropriate area ratio. Therefore, it is expected that both transparency and fracture toughness value can be achieved at a high level.

If the area ratio of the zirconia crystal grains in the first region is less than 5% or the area ratio of the zirconia crystal grains in the second region exceeds 80%, the fracture toughness value of the zirconia sintered body cannot be sufficiently ensured. If the area ratio of the zirconia crystal grains in the first region exceeds 80% or the area ratio of the zirconia crystal grains in the second region is less than 5%, the transparency of the sintered body cannot be sufficiently ensured. The area ratio of the zirconia crystal grains in the first region is more desirably 10% or greater and 45% or less, and the area ratio in the second region is more desirably 20% or greater and 50% or less. When the area ratio of the zirconia crystal grains in the first region and the area ratio of the zirconia crystal grains in the second region are adjusted within the numerical range above, the area ratio of the third region configured by zirconia crystal grains with a grain size of 0.5 μm or greater and less than 0.8 μm is 10% or greater and less than 55%. Here, the sum of the area ratios of the first, second, and third regions is 98% or greater (the remaining portion occupies regions configured by zirconia crystal grains with a grain size of less than 0.1 μm or zirconia crystal grains with a grain size exceeding 2 μm).

Further, regarding the average $Y_2O_3$ concentrations C1 and C2 of zirconia crystal grains in the first and second regions, since the crystal grains of the zirconia sintered body are configured by two phases, C phase and T phase at the sintering temperature, and the $Y_2O_3$ content in the entire composition of the sintered body is 2.5 mol% or greater and 6 mol% or less, the average $Y_2O_3$ concentration C2 of the zirconia crystal grains in the second region, which has a high C-phase ratio, falls within the range of 3.5 mol% or greater and 7.0 mol% or less. The average $Y_2O_3$ concentration C1 of the zirconia crystal grains forming the first region, which has a high T-phase ratio, falls within the range of 1.7 mol% or greater and 5 mol% or less. Moreover, when the difference between the $Y_2O_3$ concentrations is defined as $\Delta C \equiv C2-C1$, if the value of $\Delta C/C2$ becomes less than 0.2, the T-phase ratio in the first region becomes insufficient, and the fracture toughness value of the zirconia sintered body cannot be sufficiently ensured. Furthermore, a sintered body in which the average $Y_2O_3$ concentration C1 of the first region is defined such that $\Delta C/C2$ exceeds 0.5 is hard to be obtained by ordinary pressureless sintering. The value of $\Delta C/C2$ may preferably be 0.25 or greater and 0.5 or less, and more preferably 0.3 or greater and 0.45 or less. By satisfying the requirements above, the fracture toughness value of the zirconia sintered body according to the embodiment is 4.5 $MPa \cdot m^{0.5}$ or greater and 12 $MPa \cdot m^{0.5}$ or less. The fracture toughness value may preferably be 5.5 $MPa \cdot m^{0.5}$ or greater and 10 $MPa \cdot m^{0.5}$ or less.

The fracture toughness values adopted in the present embodiment are those measured by the indentation fracture (IF) method. Non-patent documents 3 and 4 have pointed out a problem that the fracture toughness value measured and calculated by the IF method tends to appear lower than that measured by other methods due to an issue in the reading accuracy at the crack tip. In contrast, even in cases where test specimens are hard to be extracted from the sintered body product, the IF method has the advantage that measurement can be performed without any problem. The lower fracture toughness measurement values can also be considered as providing a margin of safety in ensuring greater fracture toughness values for the material. The IF method described above corresponds to a method of measuring the length of indentations and cracks generated by pressing a Vickers indenter into a test specimen using a Vickers hardness tester in accordance with JIS R 1607 under a load of 30 kgf and a pressing time of 15 seconds. From this measurement, the fracture toughness value "$K_{IC}$" is calculated.

$$\text{Fracture toughness value } K_{IC}=0.018^*(E/H)^{0.5*}(P/c^{1.5})$$

$K_{IC}$: Fracture Toughness Value ($MPa \cdot m^{0.5}$)
E: Young's modulus (GPa), and 205 GPa is applied to the Young's modulus.
H: Vickers Hardness (HV) = $0.1891P/(2a)^2$
c: Half of the average crack length (m)
a: Half of the average length of the indentation (m)
P: Indentation load (N) of Vickers indenter (1 kgf = 9.80665 N)

The transparency of the zirconia sintered body is evaluated by the value of the total light transmittance measured using CIE standard light D65 in the visible wavelength range of 380 nm or greater and 780 nm or less on the test specimen of the zirconia sintered body processed to a thickness of 0.5 mm. The value of the total light transmittance may preferably be 40% or greater and 60% or less, which is greater than the value disclosed by, for example, patent document 4, and more preferably 45% or greater and 56% or less.

The zirconia sintered body according to the embodiment above can be produced by pressureless sintering by using zirconia raw material powder with the following unique particle size distribution. Specifically, the zirconia sintered body is produced using zirconia raw material powder, in the particle size distribution of the zirconia powder, measured on a volume basis using a laser scattering particle size analyzer, as follows:

Arithmetic mean particle size of 0.10 μm or greater and 0.15 μm or less,
Arithmetic standard deviation value is 0.03 μm or greater and 0.05 μm or less,
Particles greater than 0.8 μm in diameter and those smaller than 0.03 μm are not measured, and
Measured values for particles exceeding 0.4 μm in diameter and those 0.04 μm or smaller are both 0.5% or less.

FIG. 1 shows the partice size distribution measurement results for an example of zirconia raw material powder that satisfies the above conditions (hereinafter, referred to as "recommended zirconia raw material powder"). In the case where the raw material powder has a $Y_2O_3$ content of 4.5 mol%, in a particle size distribution measured by laser scattering particle size analyzer (instrument used: HORIBA LA-960) on a volume basis,

Arithmetic mean particle size: 0.129 μm
Arithmetic standard deviation: 0.040 μm
Measurement values for particles exceeding 0.4 μm and those 0.04 μm or less are zero (accordingly, measurement values for particles exceeding 0.8 μm and those less than 0.03 μm are also zero). More specifically, the maximum value of the class in which the particles are measured is 0.39 μm, and even the class exceeding 0.35 μm, which corresponds to the large-diameter peak of the bimodal powder in patent document 2, accounts for 1% or less (zero in FIG. 1).

This powder is obtained by grinding a mixture of 1 kg of commercially available pure zirconia powder and pure $Y_2O_3$ powder, 15 kg of zirconia media with a diameter of 3 mm, and 1.7 kg of pure water in a pot with an inner diameter of approximately 800 mm at a rotational speed of 78 rpm for 20 hours.

In contrast, FIG. 2 shows the particle size distribution measurement results of an example of zirconia raw material powder that falls outside the above conditions (hereinafter, referred to as "reference zirconia raw material powder"). In the case where the raw material powder has a $Y_2O_3$ content of 4.5 mol%, in a particle size distribution measured by laser scattering particle size analyzer on a volume basis,

Arithmetic mean particle size: 0.251 μm
Arithmetic standard deviation: 0.124 μm

Measurement values for particles smaller than or equal to 0.04 μm are zero, but measurement values for particles greater than 0.4 μm are 10.28%.

The powder is obtained by hydrolyzing an aqueous zirconium oxychloride solution to produce a hydrated zirconia sol, adding yttrium chloride thereto, and then drying and calcining to obtain 1 kg of a $Y_2O_3$-containing zirconia sintered powder, into which 15 kg of zirconia media having a diameter of 3 mm and 1.7 kg of pure water are charged in a pot having an inner diameter of about 800 mm, followed by pulverization at a rotational speed of 78 rpm for 10 hours.

In both cases, the zirconia media used are those made of a partially stabilized zirconia sintered body containing 4.5 mol% of $Y_2O_3$. Table 2 summarizes the results of the application volume frequency by grain size class value for each raw material powder in FIGS. 1 and 2 as well as the surface area total and surface area ratio per class per gram of powder, calculated by approximating the crystal grains as spheres.

Table 2

| FIG. 1 Raw Material Powder | | | | | FIG. 2 Raw Material Powder | | | |
|---|---|---|---|---|---|---|---|---|
| Particle size Class Value ($\mu m$) | Volume Frequency (%) | Class Surface Area Sum *Powder 1g ($m^2$) | Class Surface Area Ratio *Powder 1g (%) | | Particle size Class Value ($\mu m$) | Volume Frequency (%) | Class Surface Area Sum *Powder 1g ($m^2$) | Class Surface Area Ratio *Powder 1g (%) |
| 0.034 | 0.00 | 0.00 | 0.00 | | 0.034 | 0.00 | 0.00 | 0.00 |
| 0.039 | 0.00 | 0.00 | 0.00 | | 0.039 | 0.00 | 0.00 | 0.00 |
| 0.044 | 0.00 | 0.00 | 0.00 | | 0.044 | 0.00 | 0.00 | 0.00 |
| 0.051 | 0.00 | 0.00 | 0.00 | | 0.051 | 0.00 | 0.00 | 0.00 |
| 0.058 | 0.85 | 0.15 | 1.71 | | 0.058 | 0.40 | 0.07 | 1.36 |
| 0.067 | 2.55 | 0.38 | 4.46 | | 0.067 | 0.80 | 0.12 | 2.35 |
| 0.076 | 5.91 | 0.78 | 9.12 | | 0.076 | 1.38 | 0.18 | 3.59 |
| 0.087 | 10.42 | 1.20 | 14.04 | | 0.087 | 2.10 | 0.24 | 4.76 |
| 0.1 | 13.43 | 1.34 | 15.75 | | 0.1 | 2.93 | 0.29 | 5.78 |
| 0.115 | *16.06* | 1.40 | 16.37 | | 0.115 | 4.21 | 0.37 | 7.22 |
| 0.131 | 16.99 | 1.30 | 15.20 | | 0.131 | 5.69 | 0.43 | 8.56 |
| 0.15 | 14.63 | 0.98 | 11.43 | | 0.15 | 7.53 | 0.50 | 9.90 |
| 0.172 | 10.07 | 0.59 | 6.87 | | 0.172 | 8.82 | 0.51 | 10.11 |
| 0.197 | 5.52 | 0.28 | 3.29 | | 0.197 | 10.20 | 0.52 | 10.21 |
| 0.226 | 2.43 | 0.11 | 1.26 | | 0.226 | 10.97 | 0.49 | 9.58 |
| 0.259 | 0.88 | 0.03 | 0.40 | | 0.259 | 10.88 | 0.42 | 8.28 |
| 0.296 | 0.27 | 0.01 | 0.10 | | 0.296 | 9.85 | 0.33 | 6.56 |
| 0.339 | 0.00 | 0.00 | 0.00 | | 0.339 | 8.08 | 0.24 | 4.70 |
| 0.389 | 0.00 | 0.00 | 0.00 | | 0.389 | 5.88 | 0.15 | 2.98 |
| 0.445 | 0.00 | 0.00 | 0.00 | | 0.445 | 4.63 | 0.10 | 2.05 |
| 0.51 | 0.00 | 0.00 | 0.00 | | 0.51 | 2.90 | 0.06 | 1.12 |
| 0.584 | 0.00 | 0.00 | 0.00 | | 0.584 | 1.63 | 0.03 | 0.55 |
| 0.669 | 0.00 | 0.00 | 0.00 | | 0.669 | 0.64 | 0.01 | 0.19 |
| 0.766 | 0.00 | 0.00 | 0.00 | | 0.766 | 0.34 | 0.00 | 0.09 |
| 0.877 | 0.00 | 0.00 | 0.00 | | 0.877 | 0.10 | 0.00 | 0.02 |
| 1.005 | 0.00 | 0.00 | 0.00 | | 1.005 | 0.04 | 0.00 | 0.01 |
| 1.151 | 0.00 | 0.00 | 0.00 | | 1.151 | 0.00 | 0.00 | 0.00 |
| 1.318 | 0.00 | 0.00 | 0.00 | | 1.318 | 0.00 | 0.00 | 0.00 |
| 1.51 | 0.00 | 0.00 | 0.00 | | 1.51 | 0.00 | 0.00 | 0.00 |
| 1.729 | 0.00 | 0.00 | 0.00 | | 1.729 | 0.00 | 0.00 | 0.00 |
| 1.981 | 0.00 | 0.00 | 0.00 | | 1.981 | 0.00 | 0.00 | 0.00 |
| 2.269 | 0.00 | 0.00 | 0.00 | | 2.269 | 0.00 | 0.00 | 0.00 |
| 2.599 | 0.00 | 0.00 | 0.00 | | 2.599 | 0.00 | 0.00 | 0.00 |
| 2.976 | 0.00 | 0.00 | 0.00 | | 2.976 | 0.00 | 0.00 | 0.00 |
| 3.409 | 0.00 | 0.00 | 0.00 | | 3,409 | 0.00 | 0.00 | 0.00 |

(continued)

| FIG. 1 Raw Material Powder | | | | | FIG. 2 Raw Material Powder | | | |
|---|---|---|---|---|---|---|---|---|
| Particle size Class Value ($\mu m$) | Volume Frequency (%) | Class Surface Area Sum *Powder 1g ($m^2$) | Class Surface Area Ratio *Powder 1g (%) | | Particle size Class Value ($\mu m$) | Volume Frequency (%) | Class Surface Area Sum *Powder 1g ($m^2$) | Class Surface Area Ratio *Powder 1g (%) |
| Total | 100.00 | 8.53 | 100.00 | | Total | 100.00 | 5.07 | 100.00 |

The recommended zirconia raw material powder contains zirconia particles without $Y_2O_3$ (i.e., pure zirconia powder particles) in the unmilled state. The $Y_2O_3$ component, which will be included as a stabilizer for the zirconia phase after sintering, is also included in the form of pure $Y_2O_3$ powder particles. That is, the recommended zirconia raw material powder is obtained by blending zirconia powder particles having a $Y_2O_3$ content as a solid-solution component of less than 1.2 mol% (including 0 mol%, corresponding to the region where a single M phase appears at room temperature in FIG. 15) and yttria powder particles having a zirconia content as a solid-solution component of less than 1.0 mol% (including 0 mol%), followed by ball milling.

In the recommended zirconia raw material powder, zirconia powder particles exhibit poor transformation toughening due to low $Y_2O_3$ solid solubility. In comparison to tough zirconia media configured by partially stabilized zirconia sintered bodies (e.g., $Y_2O_3$ solid solubility of 2.0 mol% or greater and 5.0 mol% or less), they demonstrate lower hardness and are more prone to fracture crack propagation. Accordingly, fine milling by the impact force from the zirconia media can easily proceed, reducing the average diameter of the powder particles by milling in a relatively short period of time, and also reducing the possibility of residual coarse powder particles. Therefore, it is considerably convenient to obtain zirconia raw material powder with the unique particle size distribution described above (see FIG. 1) with a sharpened particle size distribution. In addition, since the yttria powder particles have even lower hardness than zirconia powder particles, the contact with the zirconia powder particles included as a raw material will also promote milling, which is expected to result in finer particles than the zirconia powder particles and uniform mixing with the zirconia powder particles. Further, this concept of recommended zirconia raw material powder can also be employed for manufacturing zirconia sintered bodies in composition regions ($Y_2O_3$ content below 2.5 mol%) where high total light transmittance is not needed, but higher fracture toughness values are demanded.

In contrast, in the reference zirconia raw material powder, the zirconia powder particles undergo solid solution of $Y_2O_3$ components by calcining, and as a result, transformation toughening is considered to have already occurred in the particle stage. Accordingly, the zirconia powder particles to be ground are hard enough to compete with the zirconia media, and even if fracture cracks are generated within the particles, their propagating is limited by the transformation toughening mechanism. Therefore, zirconia raw material powder with the unique particle size distribution described above (see FIG. 1) where the particle size distribution is sharply pointed may be presumed to be hard to be obtained by ordinary ball mill milling since fine milling by impact force from the zirconia media is hard to proceed and coarse powder particles are likely to remain.

Further, the recommended zirconia raw material powder may be prepared not only by using pure zirconia powder and pure yttria powder as described above but also by using zirconia powder with $Y_2O_3$ components solid-solved within the composition range described above, or yttria powder with zirconia components solid-solved. However, the lower the solid solution of the yttria component, the easier it is to grind the zirconia powder particles. Accordingly, it is more desirable to use pure zirconia powder and pure yttria powder when aiming for further refinement and sharpening of the particle size distribution of the resulting zirconia raw material powder.

FIG. 3 shows a scanning electron microscopic observation image (magnification of 10000x) of the surface of a zirconia sintered body (Table 1: No. 10, described below, corresponding to an example of the embodiment (the present invention)) produced by pressureless sintering at 1500°C for 2 hours in air using the sintered body raw material powder in FIG. 1. The microstructure is configured by a mixture of relatively fine crystal grains smaller than or equal to 0.4 $\mu$m (first region) and somewhat coarse crystal grains exceeding 0.8 $\mu$m (second region). In contrast, FIG. 4 shows a scanning electron microscopic observation image (magnification of 10000x) of a zirconia sintered body (Table 1: No. 22, described below, corresponding to a comparative example of the embodiment (the present invention)) produced by pressureless sintering at 1500°C for 2 hours in air using the sintered body raw material powder in FIG. 2. It can be recognized that the sintered body in FIG. 4 has a completely different microstructure from the sintered body in FIG. 3 even though the raw material powder used is almost the same compositionally. The sintered body structure in the comparative example exhibits an equiaxed microstructure, evenly displaying crystal grains with dimensions exceeding 0.4 $\mu$m, and fine crystal grains are scarcely observed.

The crystal grain size distribution on the electron microscopic observation image is quantified herein by the following method. First, 300 to 400 crystal grains are randomly selected from the image. In this specification, as shown in FIG. 5, multiple sampling lines SL are set on the image, and the crystal grains crossed by each sampling line are selected for extraction. At this time, the set interval is adjusted so that no more than one sampling line passes through a single crystal particle. For each crystal particle passing through each sampling line, parallel lines are then drawn vertically and horizontally on the image that are circumscribed to the external line of the crystal particle, and when the interval between each pair of parallel lines is set to D1 and D2, the value of Dm=(D1+D2)/2 is calculated, and the diameter of the circle with the same area as Dm is determined as the diameter of each extracted crystal particle.

FIG. 7 shows a histogram illustrating a microstructural grain size distribution (on an area basis) analyzed by the method described above using the observation image of FIG. 3 for the zirconia sintered body of No. 10 in Table 1. FIG. 8 shows a histogram illustrating a microstructural grain size distribution (on an area basis) analyzed in the same manner using the observation image of FIG. 4 for the zirconia sintered body of No. 22 in Table 1. Regarding the zirconia sintered body of the example product according to the embodiment (FIG. 7), the area ratio of crystal grains in the first region with a grain size of 0.4 μm or less reaches 14.5%. In contrast, for the zirconia sintered body of the comparative example (FIG. 8), the area ratio of crystal grains in the first region is significantly lower at 4.9%.

Since all of the sintered bodies presented relatively smooth surfaces, no particular polishing was performed, and the sintered surfaces were directly observed under magnification. For confirmation, a crystal grain size distribution was also measured by the same method for a microstructure obtained by subjecting the surface of the sintered body to mirror polishing and then performing thermal etching at 1450°C, which is 50°C lower than the sintering temperature, for one hour. Although within the range examined in the present description, it is additionally noted that the calculated results of the area ratios of the first and second regions corresponded within ±5% to those obtained using observation images of the unpolished surface of the sintered body.

Further, the average $Y_2O_3$ concentrations in the first and second regions were analyzed using a field emission electron probe microanalyzer (EPMA: JXA-8530F (JEOL Ltd.)) by the following method. Specifically, as shown in FIG. 6, within the electron microscopic observation field (magnification of 10,000×), for the first region (region PA enclosed by the white dashed line in FIG. 6; each region PA also partially contains crystal grains of intermediate size of the third region, and thus, the area of the region PA does not represent the area of the first region alone), as indicated by the solid white circle AC1 in FIG. 6, the spot diameter is adjusted within the range of 0.3 to 0.8 μm so that 3 to 4 crystal grains of 0.4 μm or less fit within the spot of the irradiating electron beam, and the concentration analysis of Zr, Y, and O is performed. The same measurement was then performed five times with the spot position on the field of view being changed, and the $Y_2O_3$ concentration was calculated from the average value of the results.

On the other hand, for crystal grains exceeding 0.8 μm in the second region (crystal grain SA, illustrated by the white arrow in FIG. 6), the spot diameter is adjusted within the range of 0.5 to 0.8 μm. This ensures that the spot of the irradiated electron beam sufficiently covers the region containing the center within the crystal grain as shown by the solid black circle AC2 in FIG. 6. The concentration analysis of Zr, Y, and O is then performed. The same measurement was then performed for 10 crystal grains with the spot position on the field of view being changed, and the $Y_2O_3$ concentration was calculated from the average value of the results. For the zirconia sintered body of the comparative example with a low area ratio of crystal grains of 0.4 μm or less, ten crystal grains each of 0.4 μm or less were individually extracted, and analysis was performed on them with the spot diameter being adjusted so that the spot of the irradiated electron beam was contained within each crystal grain.

In FIGS. 7 and 8, the analysis results of the average $Y_2O_3$ concentrations for the first and second regions are appended along with the fracture toughness values and measurement results of the total optical transmittance. For the zirconia sintered body of the example product according to the embodiment (FIG. 7), the average $Y_2O_3$ concentration in the first region with crystal grains of 0.4 μm or less is 3.6 mol%, which is lower than the $Y_2O_3$ concentration of 4.5 mol% for the overall sintered body. In contrast, the average $Y_2O_3$ concentration in the second region with crystal grains exceeding 0.8 μm is 5.7 mol%, which is greater than the $Y_2O_3$ concentration of the overall sintered body. In contrast, for the zirconia sintered body of the comparative example (FIG. 8), the average $Y_2O_3$ concentration in the first region is 4.7 mol%, and the average $Y_2O_3$ concentration in the second region is 4.4 mol%. Both values are comparable to the $Y_2O_3$ concentration of the overall sintered body (4.5 mol%), and no significant difference in $Y_2O_3$ concentration is observed between the regions. It is found that the zirconia sintered body of the example product according to the embodiment has considerably higher fracture toughness value and total light transmittance value than those of the zirconia sintered body of the comparative example product.

In addition, further detailed analysis by EPMA revealed that in the zirconia sintered body of the example product, the $Y_2O_3$ concentration in the peripheral region of zirconia crystal grains forming the second region within the sintered body structure is lower than that in the central region. As previously described, the crystal grains in the second region have dimensions of 0.8 μm or greater, which are greater than the wavelength of visible light. This results in a higher proportion of the phase-stable C phase with its high $Y_2O_3$ concentration, reducing T phase domain boundaries. Consequently, this phase considerably contributes to light transmittance. In the above structure, the central portion of the crystal grains in the second region is occupied by the C phase with high phase stability, which is considered to be more advantageous for improving the transparency of the sintered body.

As shown in FIG. 6, the microstructure of the sintered body has a stone-garden-like structure in which zirconia crystal grains SA belonging to the second region (crystal grains outlined with white dash-dot lines) are dispersed as coarse dispersed grains over a background region configured by zirconia crystal grains PA belonging to the first region (crystal grains enclosed by white solid lines) and zirconia crystal grains belonging to the third region. The microstructure of such a zirconia sintered body can be recognized as being morphologically the same as that disclosed in patent document 4. In contrast, although the sintered body of patent document 4 has almost the same composition as that of the example, the fracture toughness and total optical transmittance values are much less than those of the example. Accordingly, although no specific disclosure is provided, the $Y_2O_3$ concentration distribution within the microstructure is considered to differ considerably from that of the example product.

FIG. 9 shows a scanning electron microscopic observation image (at a magnification of 10,000x) of another field of view of the zirconia sintered body of the example product described above, and EPMA line analysis results of $Y_2O_3$ concentration measured along an analysis line crossing the background region and a plurality of coarse dispersed grains in the field of view. FIG. 9 shows a characteristic concentration profile where the $Y_2O_3$ concentration changes continuously in a wave-like pattern, exhibiting a maximum point within each coarse dispersed grain and a minimum point within the background region. This peculiar $Y_2O_3$ concentration profile is especially noticeable when the area ratio of the second region is 15% or greater and 50% or less. In the coarse dispersed grains (crystal grains in the second region) mainly configured by C-phase domains, the resistance to crack propagation is relatively low. However, it is considered that a region in which the $Y_2O_3$ concentration is reduced by the crystal grains belonging to the first region (and the third region), that is, a region where the T-phase domain ratio increases is formed around the coarse dispersed grains, and that, based on the concentration profile described above, the structure becomes such that the amount of $Y_2O_3$ concentration reduction increases with distance from the coarse dispersed grains, that is, the T-phase domain ratio gradually increases with distance from the coarse dispersed grains, thereby facilitating more effective securement of the fracture toughness value.

The following mechanism can be inferred as to the mechanism by which the use of raw material powder with a sharp grain size distribution as shown in FIG. 1 produces a characteristic microstructure that causes differences in the average $Y_2O_3$ concentration in the first and second regions. That is, the raw material powder exhibits a sharp particle size distribution peak, with particles exceeding 0.4 μm in size being virtually absent and nearly all powder particles falling within the range of 0.06 to 0.3 μm. When such raw material powder is molded and sintering is initiated, during the initial stage of sintering, as shown in the state 1 in FIG. 10, large crystal grains exceeding 0.4 μm are scarcely present at this stage, and small crystal grains SG predominate. At this stage, as shown in FIG. 12, the main mechanism is the bonding and coalescence of small crystal grains SG adjacent to each other, and it is thought that for a while, the growth continues slowly and evenly without producing prominent large grains.

However, a small number of relatively large powder grains distributed near the large-grain-size tail in the grain size distribution tend to grow larger than the others, and when their grain size exceeds a certain critical value, they rapidly grow into large crystal grains BG with the consumption of surrounding fine crystal grains FG as shown in the state 2. However, the number of these large crystal grains BG is so small that they form islands independent of their surroundings. In contrast, the small crystal grains SG, which are far from the large crystal grains BG, still grow relatively slowly, mainly by the coalescence mechanism in FIG. 12. Because of the limited number of island-like large crystal grains BG, they do not lead to coarsening of the entire microstructure as in the state 3. In contrast, small crystal grains FG that do not reach the large crystal grains to which they are merged until the end remain in the form of being left between the large crystal grains BG. These become the crystal grains in the first or third region that form the background region, and the large crystal grains BG become the crystal grains in the second region (coarse dispersion grains) SA that are dispersed as islands in the background region (see FIG. 6).

If the number of large crystal grains BG that grow excessively is small, the large crystal grains BG, as shown in FIG. 13, remain with relatively small average grain size differences from the small crystal grains SG (SG(1) to (3)) in contact therewith. According to the known theory of neck formation in solid phase sintering, the greater the dimensional difference between the large crystal grains BG and the small crystal grains SG in contact with the large crystal grains BG, the smaller the radius of curvature $\rho$ of the neck N as the junction portion, and the lower the vapor pressure, resulting in an excess increment $\Delta C$ of the vacancy concentration in the neck N in comparison to the bulk. The vacancy concentration gradient at the neck N is expressed as $\Delta C/\rho$. This is the driving force that causes the vacancies to diffuse into the interior of the crystal grains, and in turn, the constituent atoms of the crystal grains flow into the voids V between the crystal grains. This causes the void V to shrink and solid phase sintering proceeds. Since the excess increase $\Delta C$ in vacancy concentration is considered to be concentrated on the side of small crystal grains SG with a small surface curvature radius, atomic diffusion proceeds in the direction of small crystal grains SG shrinking and large crystal grains BG growing with the voids V being filled.

At this time, the smaller small crystal grains SG (3), which have a larger dimensional difference from the large crystal grains BG, are absorbed and annihilated by the larger atomic diffusion flux toward the large crystal grains BG. The small crystal grains SG (3) are entirely incorporated into the large crystal grains BG, and thus they do not considerably

increase the $Y_2O_3$ concentration of the large crystal grains BG. The same may be applied to the case where microcrystal grains FG (or small crystal grains SG) shown in FIG. 12 combine with each other.

In contrast, a considerable number of the larger small crystal grains SG (1) or SG (2) have relatively small atomic diffusion fluxes toward the large crystal grains BG and remain unabsorbed by the large crystal grains BG. It is inferred that the diffusion coefficient of atoms from the small crystal grains SG (1) and SG (2) to the large crystal grains BG is greater for Y than for Zr. That is, the greater the grain size of the small crystal grains SG (1), the more likely Y diffusion toward the large crystal grains BG will occur.

If the $Y_2O_3$ concentration of the large crystal grains BG that have grown from small crystal grains as seeds is considered to be enhanced by such an estimation mechanism, the large crystal grains are in contact with small crystal grains with lower Y concentration. That is, the concentration gradient of Y atoms is formed in the direction from the large crystal grains to the small crystal grains, i.e., in the opposite direction of the estimated Y atom diffusion. However, the EPMA results shown in the drawing strongly suggest that Y diffuses from the small crystal grains towards the large crystal grains, overcoming this concentration gradient.

According to the equilibrium state diagram in FIG. 13, the $ZrO_2$-$Y_2O_3$ binary composition tends to separate into T and C phases with different phase free energy on the $ZrO_2$ side. According to FIG. 10 in non-patent document 1, which is the source of the quotation, it shows that the free energy $\Delta Gv$ of the T phase is lower than that of the C phase in the $Y_2O_3$ concentration range assumed in the embodiment, and the difference between the two decreases as the $Y_2O_3$ concentration increases. In consideration of the dimensions of the crystal grains, the total energy of the crystal can then be expressed as the sum of the phase free energy term (volume energy) and the interfacial tension energy term (area energy) described above. As the crystal grains become finer, the contribution of the interfacial tension energy term in the total energy increases. Accordingly, if more T phases with low phase free energy are formed, the total energy of the crystal is reduced and they are energetically stable. Therefore, the small crystal grains are thought to drain Y toward the large crystal grains to increase the T-phase ratio.

As the outflow of Y from the small crystal grains SG toward the large crystal grains BG proceeds, the $Y_2O_3$ concentration of the large crystal grains BG increases and the $Y_2O_3$ concentration of the small crystal grains SG decreases. In this case, since the $Y_2O_3$ concentration decreases greater for the small crystal grains SG that are left behind, the $Y_2O_3$ concentration of the large crystal grains BG is expected to be lower in the outer regions that are fleshed out later in time.

As the voids V decrease, the shrinkage of the sintered body becomes less pronounced, and the vacancy concentration serving as the driving force for atomic diffusion also decreases, so that the small crystal grains SG remaining at that stage are less likely to undergo coalescence or absorption with the large crystal grains BG. As described above, the formation of a structure with a large $Y_2O_3$ concentration difference between the small crystal grains SG and the large crystal grains BG is considered to be generally completed with a $Y_2O_3$ concentration profile having a wave shape change being formed as shown in FIG. 6. The T-phase ratio is higher for small crystal grains SG with lower $Y_2O_3$ concentration, and the phase free energy difference between the small crystal grains SG and the large crystal grains BG with higher C-phase ratio is expanded, and thus coalescence with the large crystal grains BG is considered less likely to occur.

Next, the reason why the $Y_2O_3$ concentration differences in accordance with the crystal grain size are hard to be generated when raw material powder with a broad grain size distribution as in FIG. 2 is used can be estimated as follows. As shown in the state 1 of FIG. 11, when such a raw material powder is used, a large number of large crystal grains BG, which are present in the raw material powder from the beginning, are already included in the initial sintering stage, and as shown in FIG. 14, their dimensions are considerably greater than in the case where the raw materaial powder shown in FIG. 1 is used. Especially in the case of bimodal powders, such as those described in patent document 2 and patent document 4, which exhibit two peaks at a position of 0.3 to 0.5 $\mu$m and a position of 0.15 $\mu$m or less, the proportion of large crystal grains exceeding 0.4 $\mu$m becomes especially high.

The $Y_2O_3$ concentration of these large crystal grains BG derived from powder particles that are already large in dimension at the raw material stage is close to the composition at the time of blending, and the ratio of irregularly increased $Y_2O_3$ concentration is considered to be small. In this case, as shown in FIG. 14, in the initial sintering stage in which a considerable number of voids remain, the number ratio of fine powder grains FG and small crystal grains SG with a low degree of growth that are in contact with such large crystal grains BG having large dimensions becomes much higher than in the case of FIG. 13, and most of them are absorbed into the large crystal grains BG and disappear as in the case of the small crystal grain SG(3) in FIG. 13. It has already been described above that the $Y_2O_3$ concentration of the large crystal grains BG is unlikely to increase in such cases.

Accordingly, the process of absorption and disappearance of the surrounding small crystal grains SG by one of the considerable number of large crystal grains BG continues for a long time until the critical size, where absorption by the large crystal grains BG becomes less likely, is reached, as shown in the state 2 in FIG. 11. Therefore, until the large crystal grains BG grow considerably larger, the inflow of Y from the small crystal grains SG does not occur much, and the $Y_2O_3$ concentration of the large crystal grains BG and small crystal grains SG remains small. When the raw material powder with a bimodal distribution as in patent documents 2 or 4 is used, sintering is completed with a relatively large number of the small crystal grains SG having not so reduced $Y_2O_3$ concentration, remaining between the large crystal grains BG (FIG. 11: left of the state 3). When a one-peak raw material powder with a relatively large average particle size and a broad particle size distribution as shown in FIG. 2 in this case is used, the growth of the large crystal grains BG is expected to further advance until they almost eclipse the small crystal grains SG and reach an equiaxed crystal-like structure with a large average grain size (FIG. 11: left of the state 3). It has been confirmed that Y segregates in the vicinity of crystal grain boundaries where large crystal grains are adjacent to each other in the latter type of zirconia sintered body with an equiaxed crystal structure (non-patent document 5). It should be noted that such $Y_2O_3$ concentration distribution is completely opposite to that of the embodiment shown in FIG. 9, in which Y concentration is lower in the periphery of the large crystal grains BG and in the surrounding small crystal grains.

If the raw material powder for producing the zirconia sintered body according to the embodiment above departs from any of the conditions below mentioned above:

Arithmetic mean particle size of 0.10 μm or greater and 0.15 μm or less;
Arithmetic standard deviation value is 0.03 μm or greater and 0.05 μm or less;
Particles greater than 0.8 μm in diameter and those smaller than 0.03 μm are not measured; and
Measured values for particles exceeding 0.4 μm in diameter and those 0.04 μm or smaller are both 0.5% or less, a characteristic concentration distribution pattern may be hard to be obtained where the average $Y_2O_3$ concentration C1 (first $Y_2O_3$ concentration C1) of zirconia crystal grains forming the first region is lower than the average $Y_2O_3$ concentration C2 (second $Y_2O_3$ concentration C2) of zirconia crystal grains forming the second region (Specifically, with $\Delta C \equiv C2-C1$, the value of $\Delta C/C2$ is 0.2 or greater and 0.5 or less). In consideration of the formation of secondary particles in the powder, it may be desirable that the specific surface area value of the raw material powder measured by the BET method be 13 $m^2/g$ or less, thereby more reliably eliminating particles of 0.04 μm or less at the primary particle level. Further, the specific surface area value of the raw material powder may be set to 8 $m^2/g$ or greater, in relation to maintaining the arithmetic mean particle size within the range of 0.10 μm or greater and 0.15 μm or less.

Next, in the zirconia sintered body according to the embodiment, a portion of the $ZrO_2$ configuring the remainder may be substituted with lanthanum oxide ($La_2O_3$) at a content of 0.1 mol% or greater and 1 mol% or less based on the total composition of the sintered body. The addition of $La_2O_3$ in this composition range can further improve the total light transmittance of zirconia sintered body in comparison to those without $La_2O_3$. The substitution amount of $La_2O_3$ for $ZrO_2$ is preferably 0.15 mol% or greater and 0.8 mol% or less, more preferably 0.15 mol% or greater and 0.6 mol% or less, based on the total composition of the sintered body.

Further, in the zirconia sintered body according to the embodiment, a portion of the $ZrO_2$ configuring the remainder may be substituted with 0.2 mol% or less of aluminum oxide ($Al_2O_3$). Alternatively, it may be substituted with titanium dioxide ($TiO_2$) of 0.1 mol% or less. The inclusion of $Al_2O_3$ or $TiO_2$ in such a composition range does not especially hinder the achievement of the characteristic microstructure, composition distribution form, and hence fracture toughness values and total light transmittance of the zirconia sintered body according to the embodiment detailed above.

In the embodiment, the phrase "unavoidable impurities" refers to components that can be included to the extent that the characteristics of the zirconia sintered body according to the embodiment are not impaired, and does not necessarily mean only residual components that cannot be actively removed in the raw material powder in the manufacturing process of the zirconia sintered body, but the total of them does not exceed 0.5 mol%. For example, $Y_2O_3$ is used as a stabilizer in the embodiment, but other stabilizers such as CaO, magnesium oxide (MgO), and cerium oxide ($CeO_2$) may be included as unavoidable impurities in the concept. Silicon dioxide ($SiO_2$) can also be contained as an unavoidable impurity, and its content in the total composition of the sintered body is preferably 0.1 mass% or less.

The Vickers hardness Hv of the zirconia sintered body according to the embodiment configured as described above may be 1150 or greater, preferably 1200 or greater. Regarding flexural strength, under the premise that the pressureless sintering method is employed, it is desirable that a minimum of 600 MPa be secured when a three-point flexural strength test is conducted.

The method of producing the zirconia sintered body according to the embodiment has already been partially described, but it may be desirable to perform the following. First, pure zirconia powder (average particle size: e.g., 5 μm or less) and pure $Y_2O_3$ powder (and other constituent oxide powders), which serves as a stabilizer powder, are blended to achieve the desired composition. Zirconia media with a diameter of 1.5 mm or greater and 9 mm or less (preferably 1.5 mm or greater and 5 mm or less) and a solvent (e.g., pure water) are then added to the pot. The contents are pulverized at a predetermined rotational speed that induces an avalanche phenomenon. At this time, an appropriate amount of water-soluble binder is added, and after pulverization, the composition for molding is dried by a spray dryer or other means.

The composition may be made into a green molded body by press molding, followed by secondary processing of the green molded body by cutting, for example, if needed, and then immediately subjected to main sintering, or a calcined body may be created once, followed by secondary processing of the calcined body by cutting, for example, and then sintering. The calcining temperature when a calcined body is produced may be, for example, 800°C or greater and 1200°C or less, preferably 900°C or greater and 1000°C or less. The main sintering process may be performed at 1400°C or greater and 1580°C or less, preferably at 1420°C or greater and 1550°C or less. Both calcining and main sintering may be performed under atmospheric atmosphere at normal pressure.

When the green molded body is immediately subjected to main sintering, the sintering time to obtain a sufficiently dense sintered body is, for example, 70 or greater and 180 or less minutes. In contrast, if a calcined body is produced using a raw material powder with a particle size distribution that satisfies the conditions described above, the time needed for the main sintering process to densify the calcined body can be significantly reduced. In the case of using such a calcined body, the time of main sintering is 60 minutes or less, preferably 30 minutes or less, and even more preferably 20 minutes or less.

The method of manufacturing the zirconia sintered body according to the embodiment can be modified as needed if it does not hinder the characteristic microstructure and component distribution form of the zirconia sintered body, and thereby the fracture toughness values and total light transmittance brought about thereby.

The zirconia sintered body according to the embodiment can be used for various applications such as dental materials such as prosthetic materials, connection parts for optical fibers such as ferrules and sleeves, various tools (e.g., grinding balls, grinding tools), various components (e.g., screws, bolts and nuts), various sensors, electronics components, and ornaments (e.g., watch bands). When zirconia sintered body is used for dental materials, for example, it can be used for copings, frameworks, crowns, crown bridges, abutments, implants, implant screws, implant fixtures, implant bridges, implant bars, brackets, denture bases, inlays, onlays, orthodontic wires, and laminate veneers.

Examples

A more detailed example will be described below using experiments conducted to confirm the effectiveness of the products and the results of the experiments.

First, as raw material powders, a total of 1 kg of a mixture containing pure $Y_2O_3$ powder and pure $La_2O_3$ powder blended at various ratios with commercially available pure zirconia powder, 15 kg of zirconia media with a diameter of 3 mm, and 1.7 kg of pure water were loaded into a pot with an inner diameter of approximately 244 mm. After grinding for 20 hours at a rotation speed of 78 rpm, an appropriate amount of binder was added and mixed. The slurry was then dried using a spray dryer to obtain raw material powder with various compositions. For comparison, a composition product having a $Y_2O_3$ concentration of 4.5 mol% was also prepared by using zirconia media with a diameter of 3 mm for 1 kg of $Y_2O_3$-containing zirconia calcined powder obtained by adding yttrium chloride to a hydrated zirconia sol produced by hydrolyzing an aqueous zirconium oxychloride solution, followed by drying and calcining, with a grinding time set to 10 hours (Table 1: No. 22 described below). A portion of the slurry was not dried and was used to measure the powder particle size distribution using a laser scattering particle size analyzer. For all powders except No. 22, a grain size distribution almost the same as that shown in FIG. 1 was obtained. It was confirmed that the arithmetic mean diameter fell within the range of 0.115 to 0.130 μm, and the arithmetic standard deviation fell within the range of 0.035 to 0.042 μm.

The raw material powder was then mold-formed by a hydraulic press at N=3, and sintered at a temperature of 1500°C in atmospheric air at normal pressure to form a zirconia sintered body. The dimensions of the sintered body are 40 mm*30 mm*3 mm plates. The density of the sintered bodies was measured using the Archimedes method. Comparison with the calculated true density values for each composition confirmed that all bodies were densified to 99.5% or greater.

Next, one of the three sintered bodies was cut into a first specimen of 30 mm*30 mm*3 mm and a second specimen of 30 mm* 10 mm*3 mm. The sintered surface forming one of the main surfaces of the second specimen was observed using a Schottky electron microscope (HITACHI: SU5000) in low vacuum mode at magnification of 1000x to obtain a microstructural image. Using the obtained microstructural image, a crystal grain size distribution was measured and a histogram was prepared by the method already described, and the area ratios of a first region configured by crystal grains having a grain size of 0.1 μm or greater and less than 0.5 μm, a third region configured by crystal grains having a grain size of 0.5 μm or greater and less than 0.8 μm, and a second region configured by crystal grains having a grain size of 0.8 μm or greater were calculated as ratios to the total area of the crystal grains sampled for grain size measurement. Using the data of the measured crystal grain size distribution, the area average diameter of the sampled crystal grains (the value obtained by weighting and summing the grain diameter of each crystal grain by the circular equivalent grain area on the image and dividing the results by the total area of the sampled crystal grains) was calculated. For the second specimen, the average $Y_2O_3$ concentration CM1 in the first region and the average $Y_2O_3$ concentration CM2 in the second region were measured using the EPMA method described above and the ΔCM/CM2 values were calculated.

Next, for the first test specimen, both surfaces were ground to a thickness of 0.5 mm, after which both surfaces were mirror-polished using diamond abrasive grains. The specimens were used to measure total light transmittance in the visible light wavelength range of 380 nm or greater and 780 nm or less using a commercially available UV-visible spectrophotometer (Japan Spectroscopy: V-780) with CIE standard light D65. The Vickers hardness and fracture toughness values were measured using a commercially available Vickers hardness tester with a load of 49 N on one of the mirror polished surfaces of the first specimen. Vickers hardness and fracture toughness values were measured at 12 points per sample at different positions, and the maximum and minimum values were excluded and the remaining values were averaged.

The remaining two sintered bodies were fabricated into 3 mm*4 mm*40 mm bend specimens and tested for flexural strength by 3-point bending. Ten measurements were taken per sample for flexural strength, and the maximum and minimum measurement values were excluded and the remaining values were averaged. The above results are shown in Table 2 (in the table, * indicates that the product is outside the scope of the embodiment (the invention)).

Table 3

| Number | $Y_2O_3$ (mol%) | $La_2O_3$ (mol%) | Calcining Temperature (°C, x2hr) | First Region Area Ratio (%) 0.1-0.5μm | Third Region Area Ratio (%) 0.5-0.8 μm | Second Region Area Ratio (%) >0.8μm | Area Average Diameter (μm) | First Region CM1($Y_2O_3$) (mol%) | Second Region CM2($Y_2O_3$) (mol%) | ACM/cm$^2$ | PT (%) | SC(%) | Flexural Strength (MPa) | Hv | **KIC(IF)** (Mpa ·$m^{0.5}$) | Total light transmittance (%) (t=0.5mm) |
|---|---|---|---|---|---|---|---|---|---|---|---|---|---|---|---|---|
| 1 | 3 | 0 | 1500 | 41.6 | 47.4 | 11.0 | 0.531 | 2.2 | 3.9 | 0.44 | 36.1 | 4.6 | 810 | 1274 | 10.8 | 41.0 |
| 2 | 3 | 0.2 | 1500 | 39.6 | 41.6 | 18.8 | 0.578 | 2.3 | 3.8 | 0.39 | 33.7 | 7.5 | 780 | 1268 | 10.4 | 44.6 |
| 3 | 3 | 0.4 | 1500 | 41.2 | 39.8 | 19.0 | 0.561 | 2.1 | 3.9 | 0.46 | 36.4 | 7.9 | 669 | 1220 | 10.2 | 43.7 |
| 4 | 3 | 0.8 | 1500 | 38.2 | 37.8 | 24.0 | 0.552 | 2.2 | 3.8 | 0.42 | 33.1 | 9.6 | 660 | 1210 | 9.4 | 43.1 |
| 5 | 4 | 0 | 1500 | 21.1 | 34.5 | 44.4 | 0.702 | 2.9 | 5.1 | 0.43 | 15.8 | 27.4 | 830 | 1280 | 7.1 | 50.0 |
| 6 | 4 | 0.2 | 1500 | 21.2 | 33.3 | 45.5 | 0.692 | 3.1 | 5.0 | 0.38 | 15.2 | 27.3 | 840 | 1290 | 7.5 | 54.2 |
| 7 | 4 | 0.4 | 1500 | 27.7 | 45.7 | 26.6 | 0.680 | 3.1 | 5.0 | 0.38 | 19.9 | 16.0 | 843 | 1285 | 8.4 | 52.8 |
| 8 | 4 | 0.6 | 1500 | 28.9 | 37.3 | 33.8 | 0.676 | 3.1 | 4.9 | 0.37 | 20.7 | 19.7 | 852 | 1290 | 8.9 | 54.0 |
| 9 | 4 | 0.8 | 1500 | 26.0 | 35.0 | 39.0 | 0.667 | 2.9 | 5.1 | 0.43 | 19.5 | 24.1 | 863 | 1292 | 8.2 | 51.7 |
| 10 | 4.5 | 0 | 1500 | 14.5 | 35.0 | 49.2 | 0.660 | 3.6 | 5.7 | 0.37 | 9.2 | 35.3 | 759 | 1255 | 7.2 | 50.1 |
| 15 | 5 | 0 | 1500 | 6.0 | 25.8 | 65.0 | 0.847 | 4.1 | 6.0 | 0.32 | 3.3 | 49.8 | 650 | 1215 | 4.6 | 52.3 |
| 17 | 5 | 0.2 | 1500 | 14.8 | 38.1 | 47.1 | 0.766 | 4.0 | 5.9 | 0.32 | 8.4 | 35.3 | 966 | 1325 | 5.8 | 55.5 |
| 18 | 5 | 0.4 | 1500 | 13.3 | 42.6 | 44.1 | 0.750 | 4.0 | 6.0 | 0.33 | 7.5 | 33.8 | 949 | 1320 | 5.2 | 58.1 |
| 19 | 5 | 0.8 | 1500 | 11.4 | 33.5 | 55.1 | 0.783 | 4.0 | 6.0 | 0.33 | 6.5 | 42.2 | 991 | 1333 | 5.1 | 56.8 |
| 20* | 5.5 | 0 | 1500 | 0.6* | 15.1 | 84.3* | 0.900 | 4.3 | 6.6 | 0.35 | 0.3 | 73.1 | 982 | 1330 | 3.3 | 53.0 |
| 21* | 5.5 | 0.4 | 1500 | 3.8* | 29.9 | 66.3 | 0.785 | 4.5 | 6.5 | 0.31 | 1.8 | 56.4 | 890 | 1300 | 3.5 | 56.7 |
| 22* | 4.5 | 0 | 1500 | 4.9* | 32.3 | 62.8 | 0.782 | 4.7 | 4.4 | -0.07* | 2.2 | 314 | 765 | 1267 | 3.8 | 35.2 |
| 23* | 2* | 0 | 1500 | Cracks formed in sintered body, evaluation impossible | | | | | | | | | | | | |

*Indicates outside the scope of the present invention.

For test specimens numbered 1 to 19 where the area ratio of the first region and the area ratio of the second region fall within the ranges specified in the claims of the present invention, it is found that the value of ACM/CM2 is 0.3 or greater, the fracture toughness value is 4.5 $MPa \cdot m^{0.5}$ or greater and 12 $MPa \cdot m^{0.5}$ or less, and a high value of total light transmittance of 40% or greater is obtained. In contrast, among the test samples with a $Y_2O_3$ concentration of 5.5 mol%, sample No. 20 has an area ratio in the first region less than or equal to the lower limit of the range defined by the present invention, and an area ratio in the second region exceeding the upper limit of the range defined by the present invention. Further, sample No. 21 has an area ratio in the first region below the lower limit of the range defined by the present invention, and an area ratio in the second region exceeding the upper limit of the range defined by the present invention. It can be seen that the total light transmittance of these test specimens is excellent, but the fracture toughness values remain low. The test specimen No. 23 with a $Y_2O_3$ concentration of 2 mol% showed significant cracking in the sintered body and was not evaluated. The comparison of the results of No. 10 (example) and No. 22 (comparison) has already been described in detail and is therefore omitted.

FIGS. 16 and 17 show electron microscopic observation images of the test products of numbers 1 and 3, and FIGS. 18 and 19 show histograms of the measured results of the crystal grain size distribution of the test products. FIGS. 20 and 21 show electron microscopic observation images of the test products of numbers 5 and 7, and FIGS. 22 and 23 show histograms of the measured results of the crystal grain size distribution of the test products. Further, FIGS. 24 and 25 show electron microscopic observation images of the test products of numbers 13 and 15, and FIGS. 26 and 27 show histograms of the measured results of the crystal grain size distribution of the test products.

They show a $Y_2O_3$ concentration of 3 mol%, 4 mol%, and 5 mol%, respectively. Numbers 1, 5, and 13 show an $La_2O_3$ concentration of 0 mol%, and numbers 3, 7, and 15 show an $La_2O_3$ concentration of 0.4 mol%. From the comparison of these results, it can be seen that the higher the $Y_2O_3$ concentration is, the more likely crystal grain growth is to progress in comparison to a case at the same sintering temperature, and that the addition of $La_2O_3$ tends to increase crystal grain growth in comparison to those without the addition of $La_2O_3$.

For the test specimens numbered 1 to 21 in Table 3, except for specimens numbered 3 and 4, the same raw material powder was used. To this, several additional raw material powder compositions (Nos. 45 to 47) with further differing $Y_2O_3$ and $La_2O_3$ concentrations were added. Sintering was performed at slightly lower temperatures of 1425°C to 1475°C, and the the same evaluation was performed on the resulting test specimens. The results are shown in Table 4.

Table 4

| Number | $Y_2O_3$ (mol%) | $La_2O_3$ (mol%) | Calcining Temperatu re (°C, x2hr) | First Region Area Ratio (%) 0.1-0.5pm | Third Region Area Ratio (%) 0.5-0.8μ m | Second Region Area Ratio (%) >0.8μm | Area Average Diameter (μm) | First Region CM1 ($Y_2O_3$) (mol%) | Second Region CM2($Y_2O_3$) (mol%) | ΔCM/$cm^2$ | PT (%) | SC(%) | Flexural Strength (MPa) | Hv | KIC(IF) (Mpa · $m^{0.5}$) | Total light transmittanc e (%) (t=0.5mm) |
|---|---|---|---|---|---|---|---|---|---|---|---|---|---|---|---|---|
| 31 | 3 | 0 | 1450 | 69.8 | 20.9 | 9.3 | 0.419 | 3.0 | 5.0 | 0.40 | 51.2 | 5.6 | 1044 | 1244 | 10.3 | 40.0 |
| 32 | 3 | 0.2 | 1450 | 75.5 | 15.9 | 8.6 | 0.421 | 3.0 | 5.0 | 0.40 | 55.4 | 5.2 | 1018 | 1237 | 10.2 | 42.2 |
| 33 | 4 | 0 | 1475 | 29.8 | 31.5 | 38.7 | 0.702 | 3.0 | 5.0 | 0.40 | 21.9 | 23.2 | 795 | 1268 | 7.5 | 46.0 |
| 34 | 4 | 0.2 | 1475 | 37.0 | 21.7 | 41.3 | 0.674 | 3.1 | 5.0 | 0.38 | 26.5 | 24.8 | 1019 | 1341 | 8.2 | 53.7 |
| 35 | 4 | 0.4 | 1475 | 41.0 | 27.3 | 31.7 | 0.600 | 3.1 | 5.0 | 0.38 | 29.4 | 19.0 | 826 | 1279 | 9.2 | 52.8 |
| 36 | 4 | 0.6 | 1475 | 41.0 | 27.3 | 31.7 | 0.600 | 3.0 | 4.9 | 0.39 | 30.1 | 18.5 | 888 | 1300 | 8.7 | 54.9 |
| 37 | 4 | 0.8 | 1475 | 26.0 | 35.0 | 39.0 | 0.667 | 2.9 | 5.1 | 0.43 | 19.5 | 24.1 | 864 | 1292 | 8.2 | 51.7 |
| 38 | 4.5 | 0 | 1475 | 23.1 | 39.3 | 37.6 | 0.680 | 3.3 | 5.7 | 0.42 | 15.8 | 26.9 | 906 | 1306 | 6.7 | 48.8 |
| 39 | 5 | 0 | 1475 | 19.2 | 33.6 | 47.2 | 0.715 | 4.1 | 6.0 | 0.32 | 10.6 | 36.2 | 733 | 1245 | 6.3 | 50.2 |
| 40 | 5 | 0.2 | 1475 | 14.8 | 38.1 | 47.1 | 0.766 | 4.0 | 5.9 | 0.32 | 8.4 | 35.3 | 947 | 1319 | 6.0 | 53.1 |
| 41 | 5 | 0.4 | 1475 | 12.3 | 42.6 | 43.1 | 0.750 | 4.0 | 6.0 | 0.33 | 7.0 | 33.0 | 925 | 1312 | 5.6 | 56.0 |
| 42 | 5 | 0.8 | 1475 | 11.4 | 33.5 | 55.1 | 0.783 | 4.0 | 6.0 | 0.33 | 6.5 | 42.2 | 918 | 1310 | 5.4 | 55.7 |
| 43 | 5.5 | 0 | 1450 | 8.4 | 25.6 | 66.0 | 0.803 | 4.6 | 6.6 | 0.30 | 3.9 | 57.2 | 918 | 1310 | 5.1 | 50.8 |
| 44 | 5.5 | 0.4 | 1450 | 8.2 | 26.5 | 65.3 | 0.784 | 4.4 | 6.6 | 0.33 | 4.1 | 56.6 | 880 | 1284 | 5.3 | 57.5 |
| 45 | 5.5 | 0.8 | 1450 | 12.3 | 40.5 | 79.5 | 0.755 | 4.5 | 6.5 | 0.31 | 5.9 | 67.6 | 888 | 1300 | 5.0 | 57.8 |
| 46* | 3 | 0 | 1425 | 85.1 | 12.8 | 2.1* | 0.339* | 2.8 | 3.2 | 0.13* | 65.2 | 0.6 | 811 | 1175 | 10.3 | 36.2 |
| 47* | 6* | 0 | 1450 | 4.5* | 25.3 | 70.2 | 0.952* | 5.2' | 7.2* | 0.31 | 1.7 | 67.9 | 901 | 1330 | 3.0* | 52.3 |

*Indicates outside the scope of the present invention.

The firing temperature is slightly lowered, thereby increasing the area ratio of the first region in comparison to that of the product fired at 1500°C in Table 3. This indicates that the fracture toughness values are more excellent. Further, for the two test specimens with $Y_2O_3$ concentration of 5.5 mol% that exhibited insufficient area ratio in the first region during 1500°C sintering, resulting in fracture toughness values outside the scope of the present invention (Nos. 43 and 44: corresponding to Nos. 20 and 21 in Table 3), it is found that the scope of the present invention is satisfied for fracture toughness values, along with test specimen No. 45, which has its $La_2O_3$ concentration increased to 0.8 mol%. In contrast, in test specimen numbered 46 where the $Y_2O_3$ concentration was set to 3 mol% and the sintering temperature was lowered to 1425°C, the area ratio and area-averaged diameter of the second region were both below the lower limit of the invention, indicating that the total light transmittance was not sufficiently high. Further, for the test specimen numbered 47 where the $Y_2O_3$ concentration exceeds the upper limit of the present invention, the area ratio of the first region is insufficient and the fracture toughness value is insufficient.

Next, among the specimen compositions numbered 1 to 21 in Table 3, six specimens having a $Y_2O_3$ concentration of 3, 4, or 5 mol% and an $La_2O_3$ concentration of 0 or 0.4 mol% were prepared using raw material powders in which a portion of the $ZrO_2$ was substituted with 0.1 mol% of $Al_2O_3$ (Nos. 51 to 56) and 0.05 mol% of $TiO_2$ (Nos. 57 to 62), respectively, and sintering was performed at 1500°C, followed by evaluation of the obtained specimens in the same manner. The results are shown in Table 5.

Table 5

| Number | $Y_2O_3$ (mol%) | $La_2O_3$ (mol%) | Calcining Temperatur e (°C, x2hr) | First Region Area Ratio (%) 0.1-0.5μ m | Third Region Area Ratio (%) 0.5-0.8μ m | Second Region Area Ratio (%) >0.8μm | Area Average Diameter (μm) | First Region CM1 ($Y_2O_3$) (mol%) | Second Region CM2($Y_2O_3$) (mol%) | ΔCM/cm$^2$ | PT (%) | SC (%) | Flexural Strength (MPa) | Hv | KIC(IF) (Mpa · m$^{0.5}$ | Total light transmittanc e (%) (t=0.5mm) |
|---|---|---|---|---|---|---|---|---|---|---|---|---|---|---|---|---|
| 51 | 3 | 0 | 1500 | 39.8 | 45.3 | 14.9 | 0.524 | 2.1 | 3.9 | 0.46 | 35.2 | 6.2 | 832 | 1290 | 10.5 | 41.2 |
| 52 | 3 | 0.4 | 1500 | 40.3 | 38.9 | 20.8 | 0.571 | 2.1 | 4.0 | 0.48 | 35.6 | 9.0 | 690 | 1240 | 10.1 | 44.0 |
| 53 | 4 | 0 | 1500 | 19.9 | 33.4 | 46.7 | 0.742 | 2.9 | 5.1 | 0.43 | 14.9 | 28.8 | 805 | 1250 | 6.8 | 48.0 |
| 54 | 4 | 0.4 | 1500 | 28.9 | 42.3 | 28.8 | 0.698 | 3.2 | 4.9 | 0.35 | 20.2 | 16.8 | 853 | 1298 | 8.6 | 53.1 |
| 55 | 5 | 0 | 1500 | 7.2 | 26.3 | 66.5 | 0.855 | 4.1 | 6.0 | 0.32 | 4.0 | 51.0 | 678 | 1215 | 4.5 | 53.3 |
| 56 | 5 | 0.4 | 1500 | 15.0 | 41.3 | 43.7 | 0.753 | 4.1 | 6.0 | 0.32 | 8.3 | 33.5 | 923 | 1330 | 5.1 | 57.0 |
| 57 | 3 | 0 | 1500 | 40.2 | 44.2 | 156 | 0.518 | 2.1 | 3.9 | 0.46 | 35.5 | 6.5 | 841 | 1295 | 10.3 | 42.0 |
| 58 | 3 | 0.4 | 1500 | 39.5 | 37.0 | 23.5 | 0.568 | 2.2 | 3.9 | 0.44 | 34.2 | 9.8 | 690 | 1230 | 9.9 | 46.0 |
| 59 | 4 | 0 | 1500 | 19.5 | 34.0 | 46.5 | 0.756 | 2.9 | 5.1 | 0.43 | 14.6 | 28.7 | 810 | 1254 | 6.7 | 49.0 |
| 60 | 4 | 0.4 | 1500 | 29.5 | 40.2 | 30.3 | 0.689 | 3.1 | 5.0 | 0.38 | 21.1 | 18.2 | 850 | 1288 | 8.7 | 53.6 |
| 61 | 5 | 0 | 1500 | 9.6 | 27.3 | 63.1 | 0.843 | 4.0 | 5.9 | 0.32 | 5.4 | 47.3 | 689 | 1225 | 4.7 | 53.9 |
| 62 | 5 | 0.4 | 1500 | 13.2 | 40.3 | 46.5 | 0.769 | 4.1 | 6.0 | 0.32 | 7.3 | 35.7 | 910 | 1300 | 5.2 | 56.2 |

Samples 51-56 contain addition of 0.1 mol% $Al_2O_3$. Samples 57-62 contain addition of 0.05 mol% $TiO_2$.

The evaluation results for these test specimens are all almost the same as those of the corresponding compositions in Table 1, indicating that they are not adversely affected by the addition of $Al_2O_3$ and $TiO_2$.

For the above results, the value PT was calculated using the following equation (A) in which S1 represents the area ratio of the first region and CM1 represents the average $Y_2O_3$ concentration of the first region in the sintered body microstructure:

$$PT\ (\%)=S1*\{(7.4-CM1)/6\}*100\ldots(A)$$

In the same manner, the value SC was calculated using the following equation (B) in which S2 represents the area ratio of the second region and CM2 represents the average $Y_2O_3$ concentration of the second region in the sintered body microstructure:

$$SC\ (\%)=S1*\{(CM2-1.4)/6\}*100\ldots(B)$$

The calculated values of PT and SC are shown in Tables 3 to 5. In both equations (A) and (B), the denominator value "6" represents the distance between point A ($Y_2O_3$ concentration: approximately 1.4 mol%), which indicates the solubility limit of $Y_2O_3$ in $ZrO_2$ at 800°C where atomic diffusion becomes somewhat sluggish, and point B ($Y_2O_3$ concentration: approximately 7.4 mol%), which indicates the solubility limit of $ZrO_2$ in $Y_2O_3$ in the equilibrium phase diagram of FIG. 15. In FIG. 15, when the given composition point is O, the ratio of C and T phases in phase equilibrium can be expressed by AO/AB and BO/AB, respectively. Accordingly, the right-hand side of equation (A) gives the upper limit of the area ratio of the T phase in the first region expected at equilibrium, and the right-hand side of equation (B) gives the upper limit of the area ratio of the C phase in the second region expected at equilibrium, and PT is named as the converted tetragonal crystal area ratio and SC is named as the converted cubic crystal area ratio. These values do not immediately imply the amount of T or C phase actually present in the zirconia sintered body, but it is expected from the phase equilibrium theory that a greater value of PT will result in a greater area ratio of real tetragonal crystal and a greater value of SC will result in a greater area ratio of real cubic crystal.

The fracture toughness values (KIC) in Tables 3 and 4 are plotted with respect to the PT values above in FIG. 28. The white plotted points in FIG. 28 represent data from test specimens without $La_2O_3$ addition, and the black plotted points represent data from test specimens with $La_2O_3$ addition (the shape of the black plotted points is varied to indicate different $La_2O_3$ addition amounts). Independent from the addition of $La_2O_3$, the fracture toughness values increase almost linearly with respect to the PT values, which clearly shows that the above inference is not false. From these results, it can be seen that when the converted tetragonal crystal area ratio PT (%) within the first region is 7% or greater and 32% or less, the fracture toughness values measured by the IF method can be reliably maintained within the range of 5.5 $MPa \cdot m^{0.5}$ or greater and 10 $MPa \cdot m^{0.5}$ or less. Further, to adjust the converted tetragonal crystal area ratio PT to the above range, it is desirable that the $Y_2O_3$ content be 3.7 mol% or greater and 5.3 mol% or less, and that the area ratio of the first region in the sintered body structure be 10% or greater and 45% or less.

Next, the results of total light transmittance in Tables 3 and 4 plotted with respect to the above SC values are shown in FIG. 29. The white plotted points in FIG. 29 represent data from test specimens without $La_2O_3$ addition, and the black plotted points represent data from test specimens with $La_2O_3$ addition (the shape of the black plotted points is varied to indicate different $La_2O_3$ addition amounts). The total light transmittance tends to increase monotonically with increasing PT, but the tendency of increase varies with the amount of $La_2O_3$ added. Upon closer inspection, it can then be seen that the data points for the total optical transmittance of the test specimen with $La_2O_3$ added are almost without exception on the greater side than the data points for the total optical transmittance of the test specimen without $La_2O_3$. Further, the results of logarithmic regression analysis conducted for each addition amount of $La_2O_3$ are additionally shown in FIG. 29 in which the solid line represents the logarithmic regression curve for an addition amount of $La_2O_3$ of 0 mol%, the dash-dot line represents that of 0.2 mol%, and the dashed lines represent those of 0.4 mol% and 0.8 mol%, respectively (the curves for 0.4 mol% and 0.8 mol% of $La_2O_3$ are almost overlapping). According to these results, the total light transmittance of the sintered bodies tends to increase with $La_2O_3$ addition levels ranging from approximately 0.4 mol% to 0.6 mol%. Beyond this range, further increases in $La_2O_3$ addition lead to a plateau in the improvement of the total light transmittance. Therefore, when adding $La_2O_3$ to improve the total light transmittance of the sintered body, it is recommended that a portion of the remaining $ZrO_2$ be replaced with $La_2O_3$ at a content of 0.1 mol% or greater and 0.8 mol% or less relative to the total composition of the sintered body.

From these results, it can be seen that when the converted cubic crystal area ratio SC (%) within the second region is 15% or greater and 45% or less, the total light transmittance measured using CIE standard light D65 in the visible light wavelength range of 380 nm or greater and 780 nm or less can be reliably maintained at 45% or greater for test specimens of zirconia sintered bodies processed to have a thickness of 0.5 mm. Further, to adjust the converted cubic crystal area ratio SC to the above range, it is desirable that the $Y_2O_3$ content be 3.7 mol% or greater and 5.3 mol% or less, and that the area ratio of the second region in the microstructure of the sintered body be 20% or greater and 50% or less.

In adjusting the raw material powder, 15 kg of zirconia media with a diameter of 3 mm was replaced with a mixture of 11.6 kg of zirconia media with a diameter of 3 mm and 3.4 kg of zirconia media with a diameter of 2 mm, and pulverization was performed in the same pot as described above along with 1 kg of the raw material and 1.5 kg of pure water in the same manner. As a result, for any of the raw material compositions, a raw material powder having almost the same particle size distribution as that obtained using zirconia media with a diameter of 3 mm alone could be obtained with a grinding time shorter by 50 to 60%. By sintering these raw material powders under the same conditions as described above, sintered bodies with almost the same characteristics could be obtained.

## Claims

1. A zirconia sintered body having a relative density of 99% or greater, in which a $Y_2O_3$ content in a total composition of the zirconia sintered body is 2.5 mol% or greater and 6 mol% or less, and a remainder configured by $ZrO_2$ and unavoidable impurities, wherein

    in an electron microscopic observation image of a microstructure of the sintered body,
    an area-averaged grain size of zirconia crystal grains is 0.4 μm or greater and 0.9 μm or less,
    an area ratio of zirconia crystal grains with a grain size of less than 0.1 μm and an area ratio of zirconia crystal grains with a grain size exceeding 2 μm are both less than 1%,
    an area ratio of a first region configured by zirconia crystal grains with a grain size of 0.1 μm or greater and less than 0.5 μm is 5% or greater and 80% or less,
    an area ratio of a second region configured by zirconia crystal grains with a grain size of 0.8 μm or greater and less than 2 μm is 5% or greater and 80% or less,
    an area ratio of a third region configured by zirconia crystal grains with a grain size of 0.5 μm or greater and less than 0.8 μm is 10% or greater and less than 55%,
    an average $Y_2O_3$ concentration C2 of the zirconia crystal grains forming the second region is 3.5 mol% or greater and 7.0 mol% or less,
    an average $Y_2O_3$ concentration C1 of the zirconia crystal grains forming the first region is 1.7 mol% or greater and 5 mol% or less, and when a difference in the $Y_2O_3$ concentrations is denoted as $\Delta C \equiv C2-C1$, a value of $\Delta C/C2$ is 0.2 or greater and 0.5 or less, and
    a fracture toughness value measured by IF method is 4.5 $MPa \cdot m^{0.5}$ or greater and 12 $MPa \cdot m^{0.5}$ or less.

2. The zirconia sintered body according to claim 1, wherein a portion of the $ZrO_2$ configuring the remainder is substituted with $La_2O_3$ of 0.1 mol% or greater and 1 mol% or less with respect to a content in an entire composition of the sintered body.

3. The zirconia sintered body according to claim 1, wherein a portion of the $ZrO_2$ configuring the remainder is substituted with $Al_2O_3$ of 0.2 mol% or less with respect to a content in an entire composition of the sintered body.

4. The zirconia sintered body according to claim 1, wherein a portion of the $ZrO_2$ configuring the remainder is substituted with $TiO_2$ of 0.1 mol% or less with respect to a content in an entire composition of the sintered body.

5. The zirconia sintered body according to claim 1, wherein Vickers hardness Hv is 1150 or greater.

6. The zirconia sintered body according to claim 1, wherein a value of total light transmittance measured in a visible light wavelength range of 380 nm or greater and 780 nm or less using CIE standard light D65 for a test specimen obtained by machining the zirconia sintered body to have a thickness of 0.5 mm is 40% or greater and 60% or less.

7. The zirconia sintered body according to claim 1, wherein when S1 represents an area ratio of the first region in the microstructure of the sintered body and CM1 represents an average $Y_2O_3$ concentration of the first region, a converted tetragonal crystal area ratio PT (%) in the first region calculated by PT=S1* {(7.4-CM1)/6} *100 is 3% or greater and 60% or less.

8. The zirconia sintered body according to claim 1, wherein when S1 represents an area ratio of the first region in the microstructure of the sintered body, S2 represents an area ratio of the second region in the microstructure of the sintered body, and CM2 represents an average $Y_2O_3$ concentration of the second region, a converted cubic crystal area ratio SC (%) in the second region calculated by SC=S1*{(CM2-1.4)/6} *100 is 4% or greater and 70% or less.

**9.** The zirconia sintered body according to claim 1, wherein in the microstructure of the sintered body, the zirconia crystal grains configuring the second region have a lower $Y_2O_3$ concentration in a peripheral portion thereof than in a central portion thereof.

**10.** The zirconia sintered body according to claim 9, wherein the microstructure of the sintered body has an area ratio of the second region of 15% or greater and 50% or less, and forms a stone-garden-like structure in which zirconia crystal grains belonging to the second region are dispersed as coarse dispersed grains over a background region configured by zirconia crystal grains belonging to the first region and zirconia crystal grains belonging to the second region, and when a $Y_2O_3$ concentration is measured along an analysis line crossing the background region and a plurality of the coarse dispersed grains, a concentration profile is exhibited in which the $Y_2O_3$ concentration continuously varies in a wave-like manner, showing a maximum point within the respective coarse dispersed grains and a minimum point within the background region.

**11.** The zirconia sintered body according to claim 1, wherein

a content of $Y_2O_3$ is 3.7 mol% or greater and 5.3 mol% or less,
an area ratio of the first region in the microstructure of the sintered body is 10% or greater and 45% or less,
when an area ratio of the first region in the microstructure of the sintered body is S1 and an average $Y_2O_3$ concentration in the first region is CM1,
a converted tetragonal crystal area ratio PT (%) in the first region calculated by PT=S1* {(7.4-CM1)/6} *100 is 7% or greater and 32% or less, and
a fracture toughness value measured by IF method is 5.5 MPa·$m^{0.5}$ or greater and 10 MPa·$m^{0.5}$ or less.

**12.** The zirconia sintered body according to claim 1, wherein

a content of $Y_2O_3$ is 3.7 mol% or greater and 5.3 mol% or less,
an area ratio of the second region in the microstructure of the sintered body is 20% or greater and 50% or less, and
when an area ratio of the first region in the microstructure of the sintered body is S1, an area ratio of the second region in the microstructure of the sintered body is S2, and an average $Y_2O_3$ concentration in the second region is CM2, a converted cubic crystal area ratio SC (%) within the second region calculated by SC=SI * {(CM2-1.4)/6} *100 is 15% or greater and 45% or less, and
a value of total light transmittance measured in a visible light wavelength range of 380 nm or greater and 780 nm or less using CIE standard light D65 for a test specimen of the zirconia sintered body machined to have a thickness of 0.5 mm is 45% or greater.

**13.** The zirconia sintered body according to claim 11, wherein

a portion of the $ZrO_2$ configuring the remainder is substituted with $La_2O_3$ at a content of 0.1 mol% or greater and 0.8 mol% or less with respect to a total composition of the sintered body, and
a value of the total light transmittance is greater than or equal to 50%.

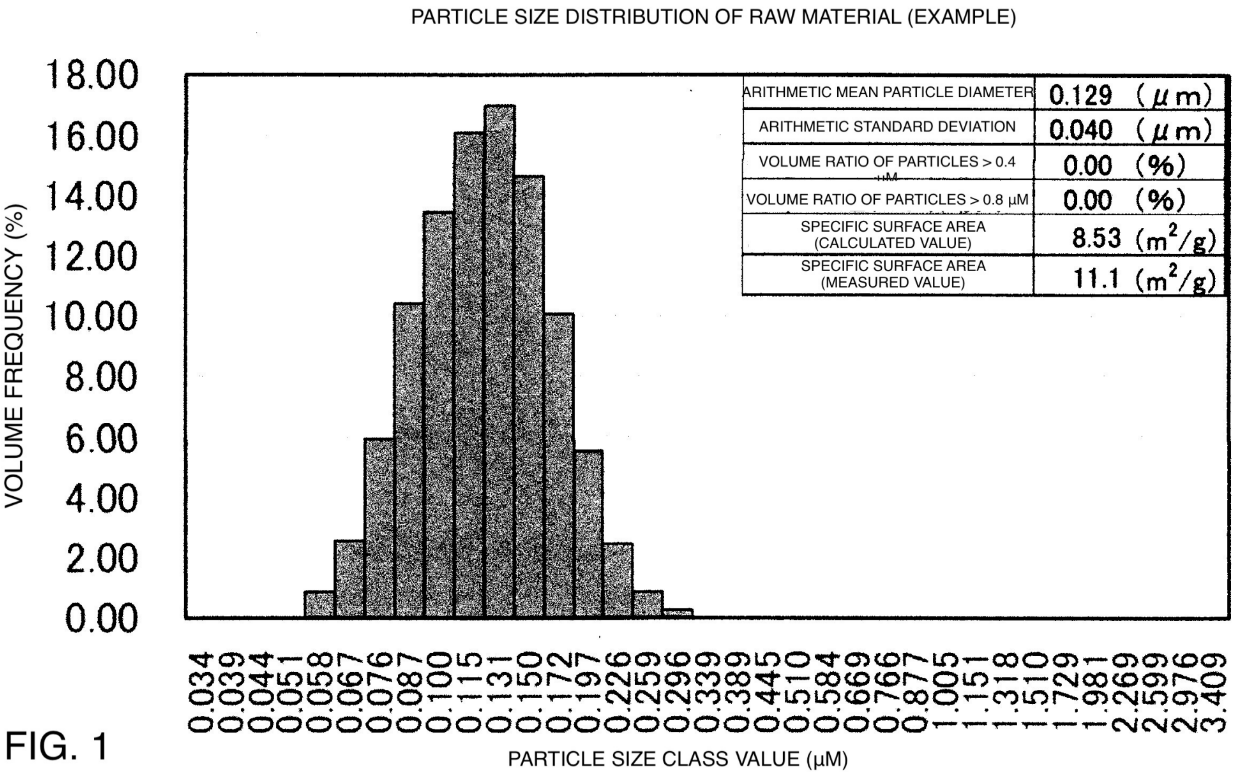
PARTICLE SIZE DISTRIBUTION OF RAW MATERIAL (EXAMPLE)
ARITHMETIC MEAN PARTICLE DIAMETER 0.129 (μm)
ARITHMETIC STANDARD DEVIATION 0.040 (μm)
VOLUME RATIO OF PARTICLES > 0.4 μM 0.00 (%)
VOLUME RATIO OF PARTICLES > 0.8 μM 0.00 (%)
SPECIFIC SURFACE AREA (CALCULATED VALUE) 8.53 (m2/g)
SPECIFIC SURFACE AREA (MEASURED VALUE) 11.1 (m2/g)
VOLUME FREQUENCY (%)
18.00
16.00
14.00
12.00
10.00
8.00
6.00
4.00
2.00
0.00
0.034 0.039 0.044 0.051 0.058 0.067 0.076 0.087 0.100 0.115 0.131 0.150 0.172 0.197 0.226 0.259 0.296 0.339 0.389 0.445 0.510 0.584 0.669 0.766 0.877 1.005 1.151 1.318 1.510 1.729 1.981 2.269 2.599 2.976 3.409
PARTICLE SIZE CLASS VALUE (μM)

FIG. 1

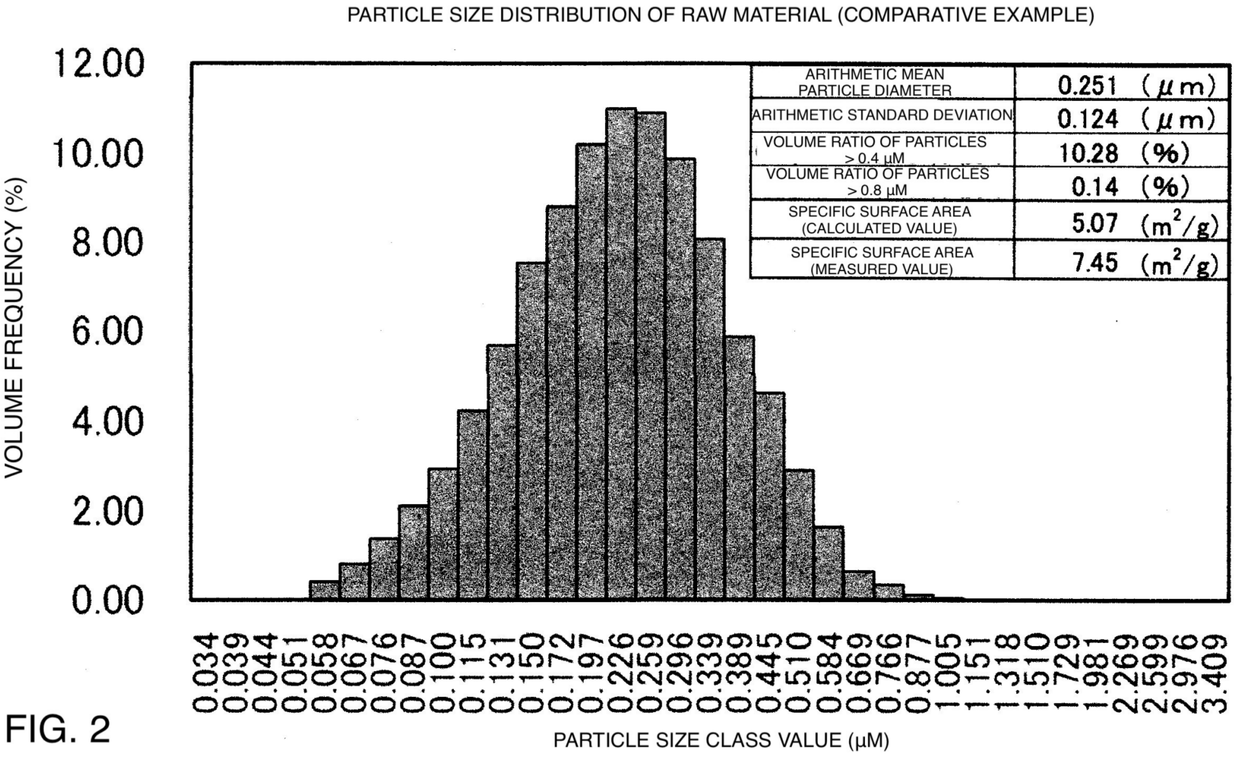
PARTICLE SIZE DISTRIBUTION OF RAW MATERIAL (COMPARATIVE EXAMPLE)
VOLUME FREQUENCY (%)
12.00
10.00
8.00
6.00
4.00
2.00
0.00
ARITHMETIC MEAN PARTICLE DIAMETER 0.251 (μm)
ARITHMETIC STANDARD DEVIATION 0.124 (μm)
VOLUME RATIO OF PARTICLES > 0.4 μM 10.28 (%)
VOLUME RATIO OF PARTICLES > 0.8 μM 0.14 (%)
SPECIFIC SURFACE AREA (CALCULATED VALUE) 5.07 (m2/g)
SPECIFIC SURFACE AREA (MEASURED VALUE) 7.45 (m2/g)
0.034 0.039 0.044 0.051 0.058 0.067 0.076 0.087 0.100 0.115 0.131 0.150 0.172 0.197 0.226 0.259 0.296 0.339 0.389 0.445 0.510 0.584 0.669 0.766 0.877 1.005 1.151 1.318 1.510 1.729 1.981 2.269 2.599 2.976 3.409
PARTICLE SIZE CLASS VALUE (μM)

FIG. 2

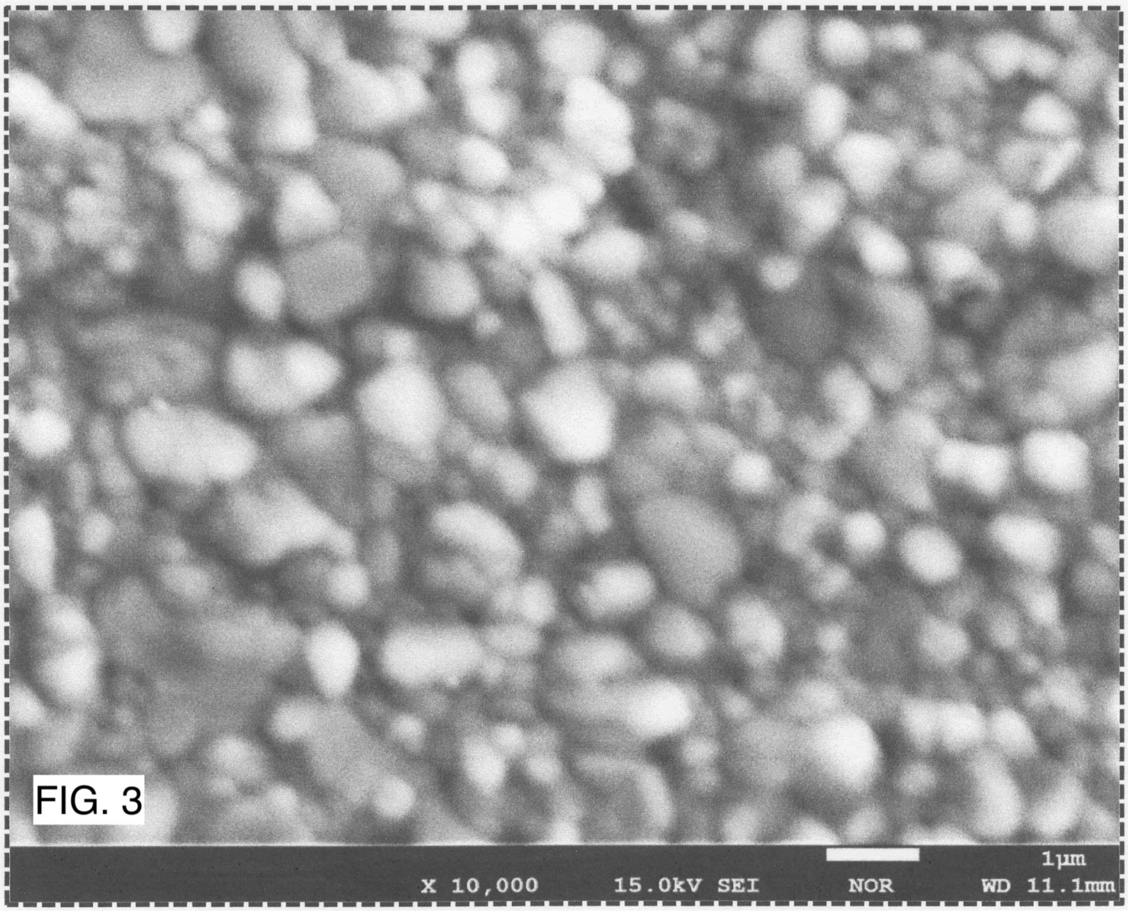


FIG. 3

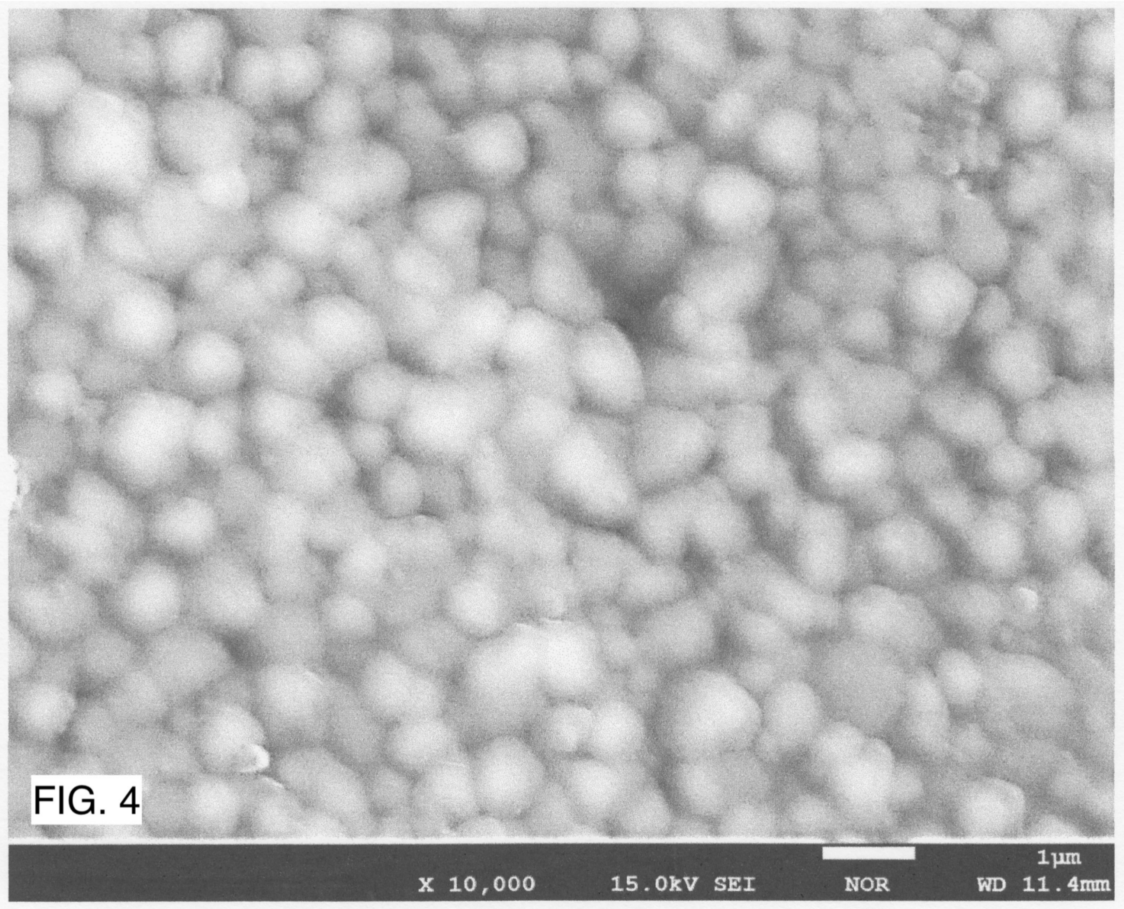

FIG. 4

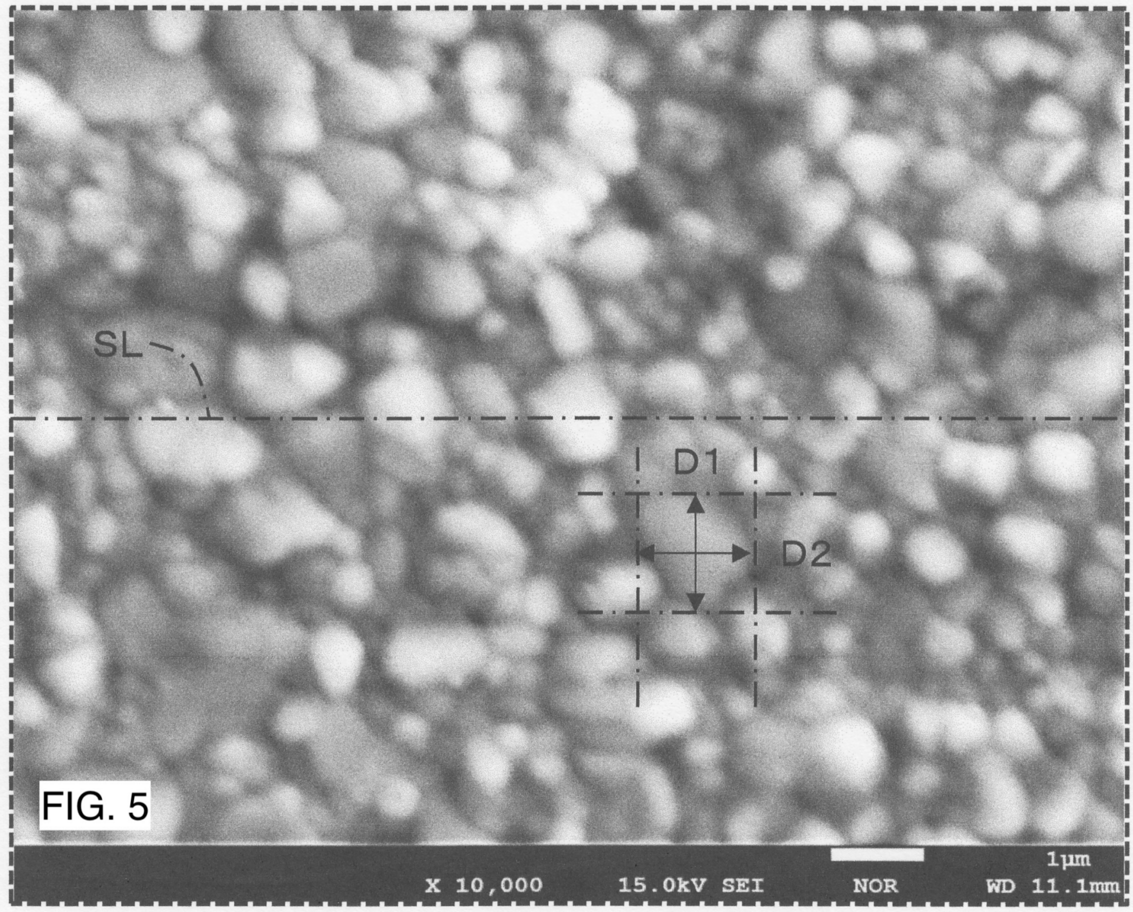


FIG. 5

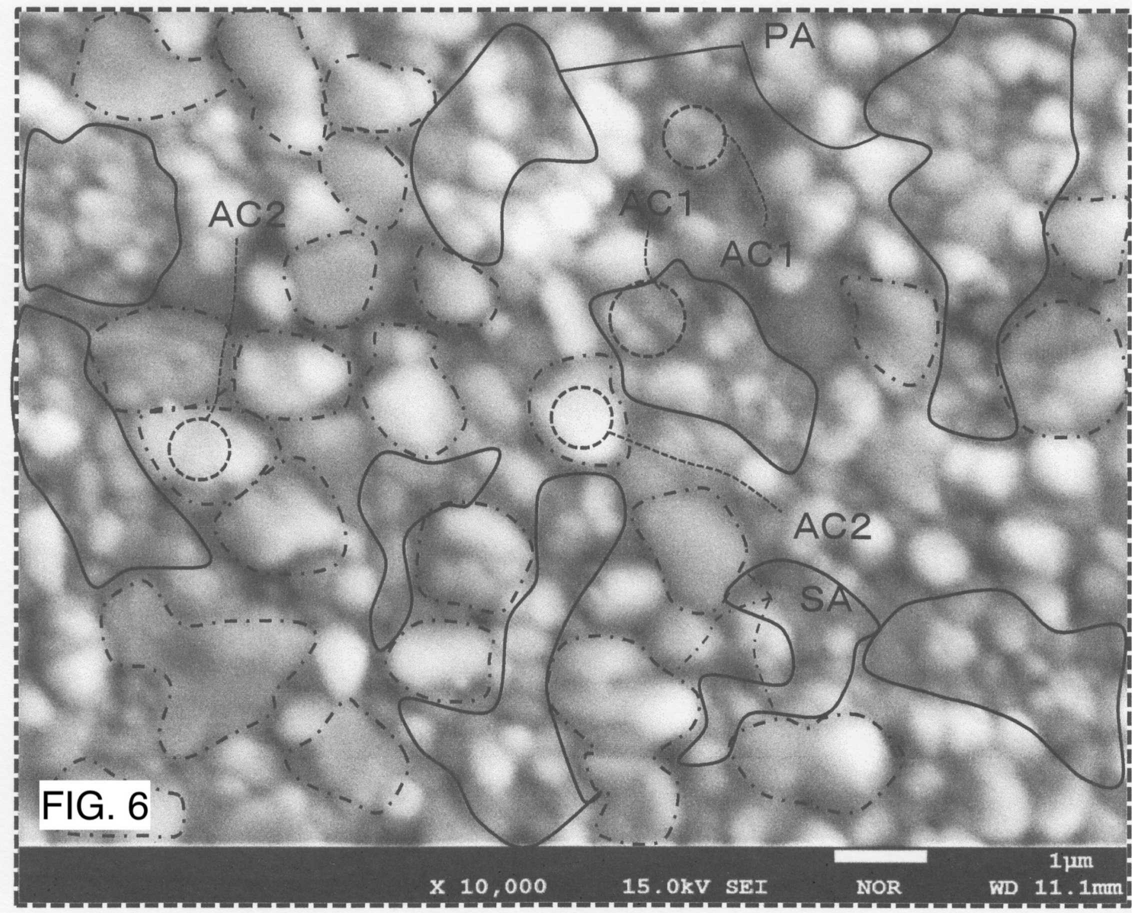


FIG. 6

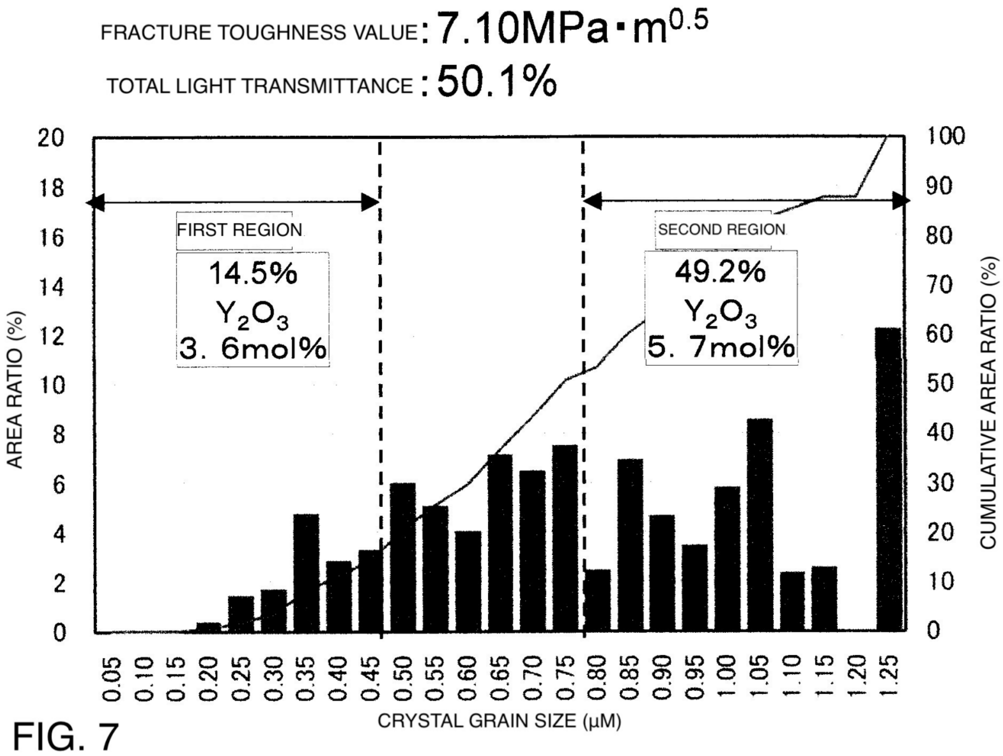
FRACTURE TOUGHNESS VALUE: 7.10MPa·m^0.5
TOTAL LIGHT TRANSMITTANCE: 50.1%
FIRST REGION
14.5%
Y2O3
3. 6mol%
SECOND REGION
49.2%
Y2O3
5. 7mol%
AREA RATIO (%)
CUMULATIVE AREA RATIO (%)
CRYSTAL GRAIN SIZE (μM)
0
2
4
6
8
10
12
14
16
18
20
10
20
30
40
50
60
70
80
90
100
0.05
0.10
0.15
0.20
0.25
0.30
0.35
0.40
0.45
0.50
0.55
0.60
0.65
0.70
0.75
0.80
0.85
0.90
0.95
1.00
1.05
1.10
1.15
1.20
1.25

FIG. 7

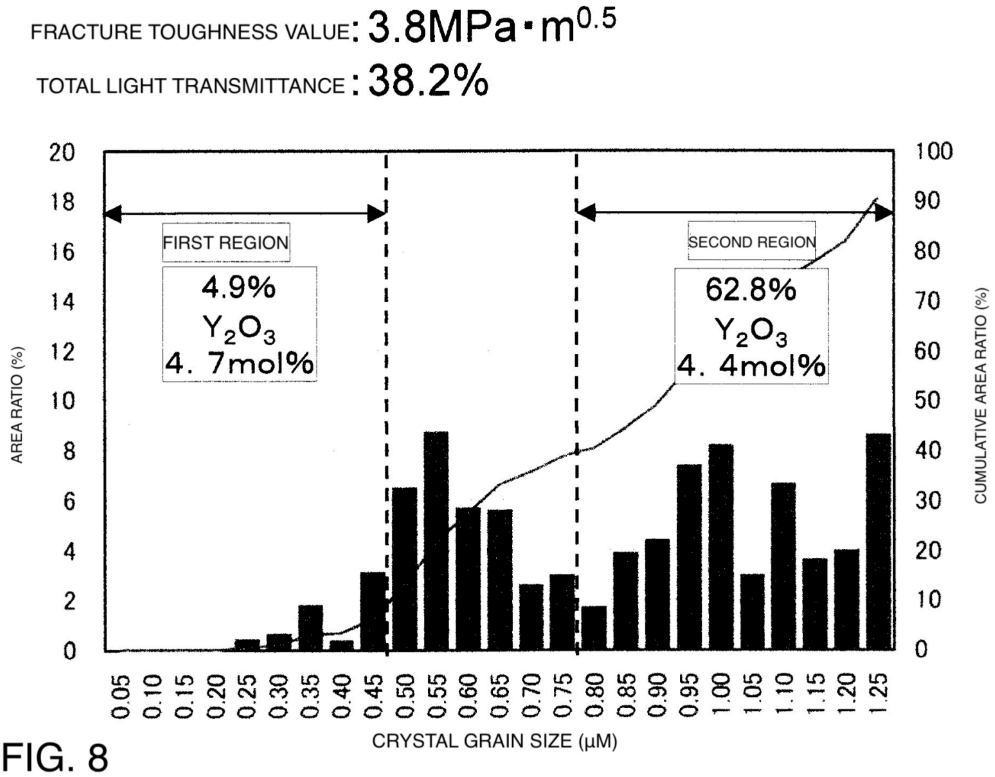
FRACTURE TOUGHNESS VALUE: 3.8MPa・m0.5
TOTAL LIGHT TRANSMITTANCE : 38.2%
FIRST REGION
4.9%
Y2O3
4. 7mol%
SECOND REGION
62.8%
Y2O3
4. 4mol%
AREA RATIO (%)
CUMULATIVE AREA RATIO (%)
CRYSTAL GRAIN SIZE (μM)
0
2
4
6
8
10
12
14
16
18
20
0
10
20
30
40
50
60
70
80
90
100
0.05
0.10
0.15
0.20
0.25
0.30
0.35
0.40
0.45
0.50
0.55
0.60
0.65
0.70
0.75
0.80
0.85
0.90
0.95
1.00
1.05
1.10
1.15
1.20
1.25

FIG. 8

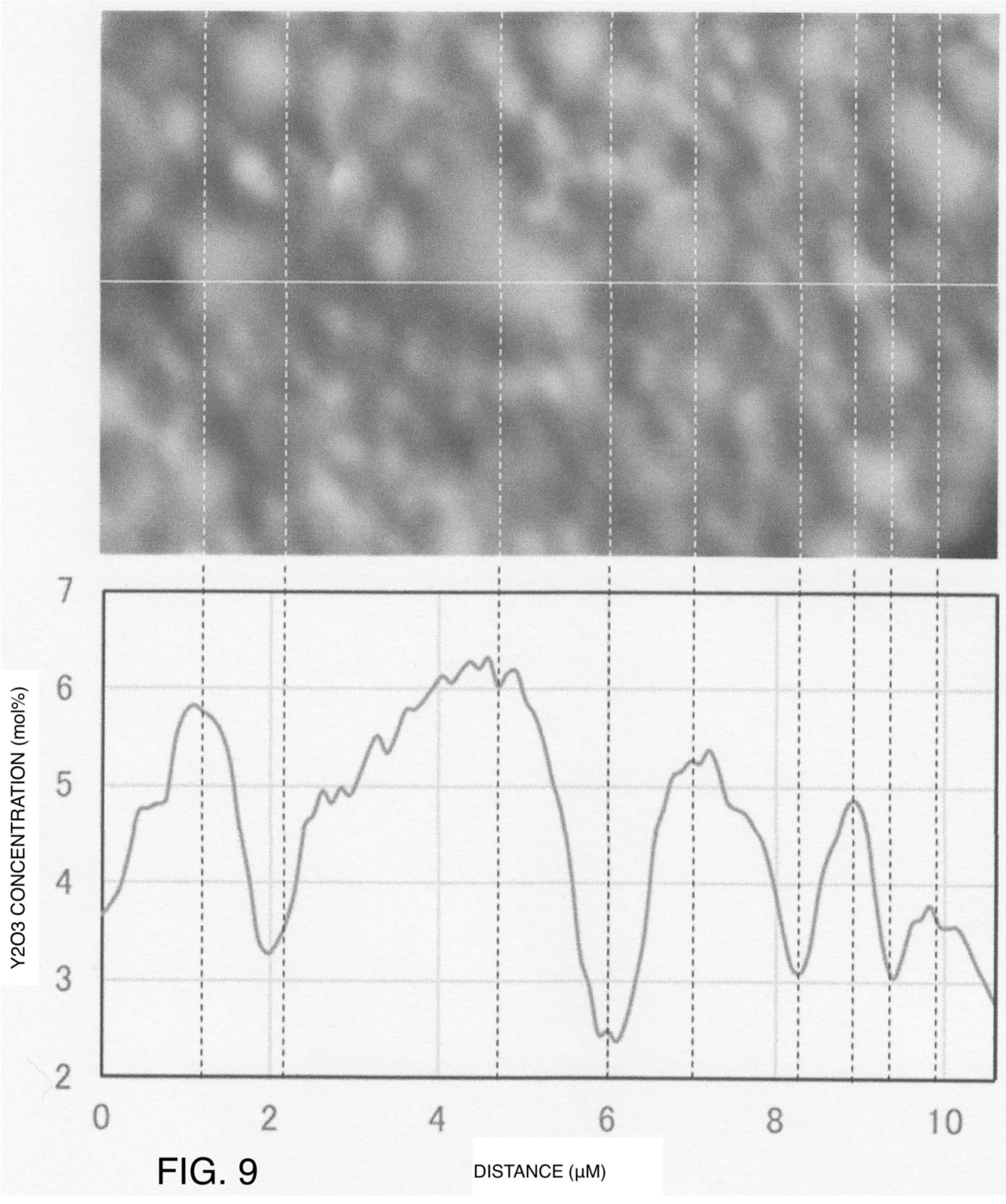


FIG. 9

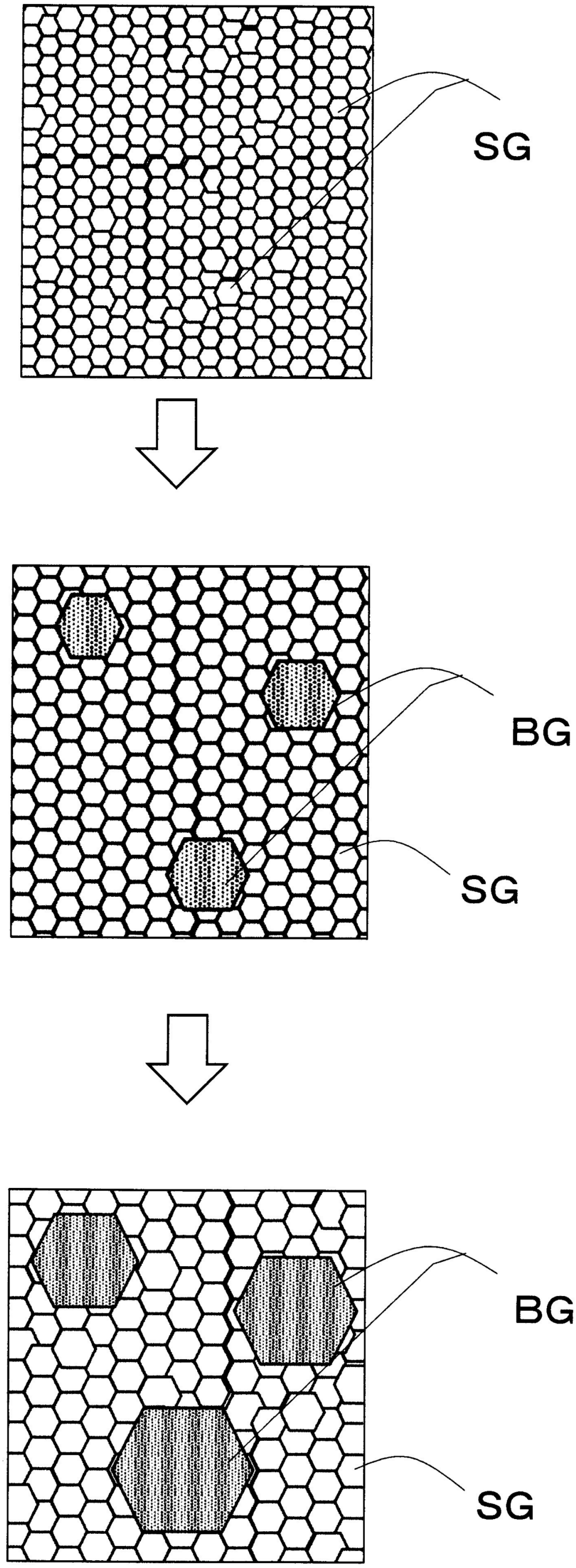


FIG. 10

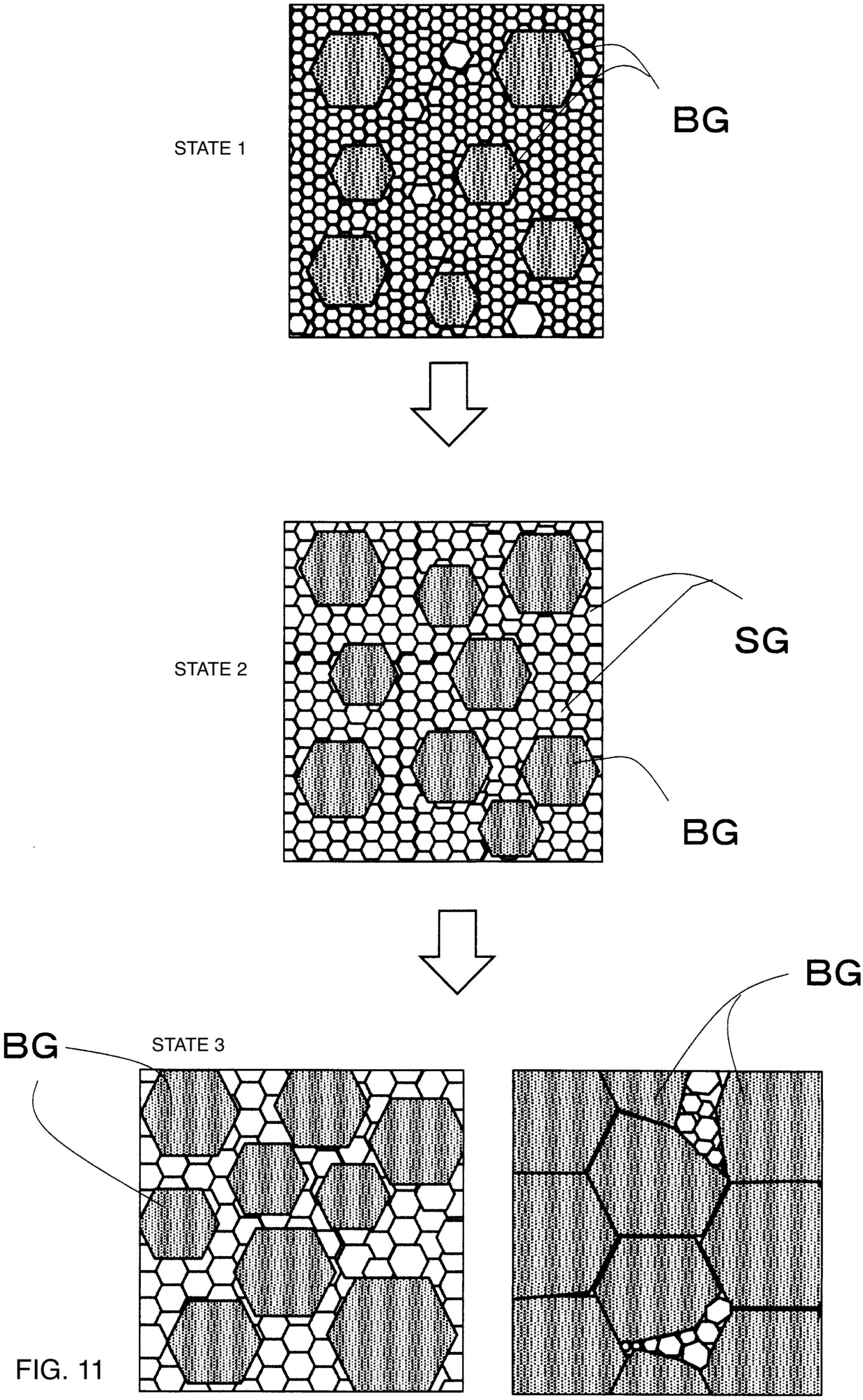


FIG. 11

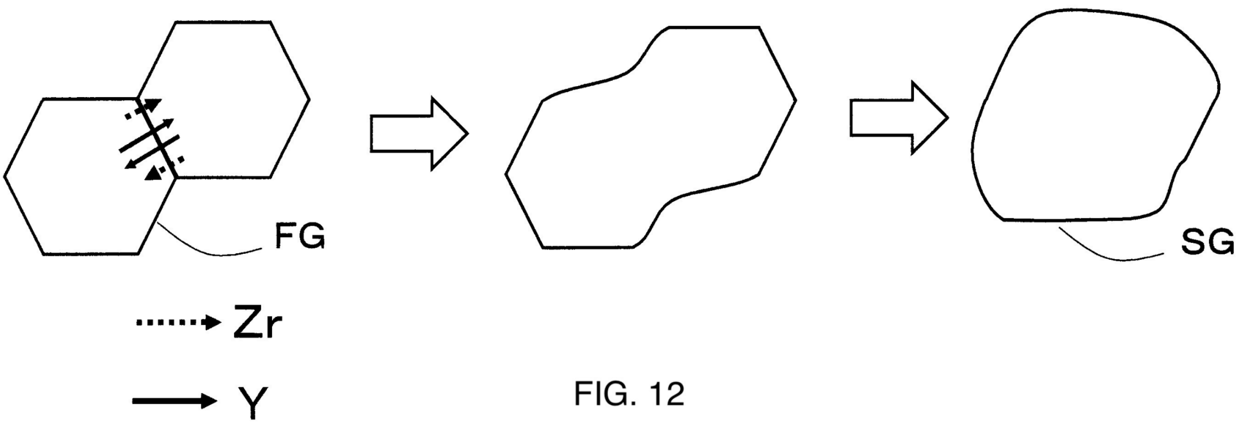


FIG. 12

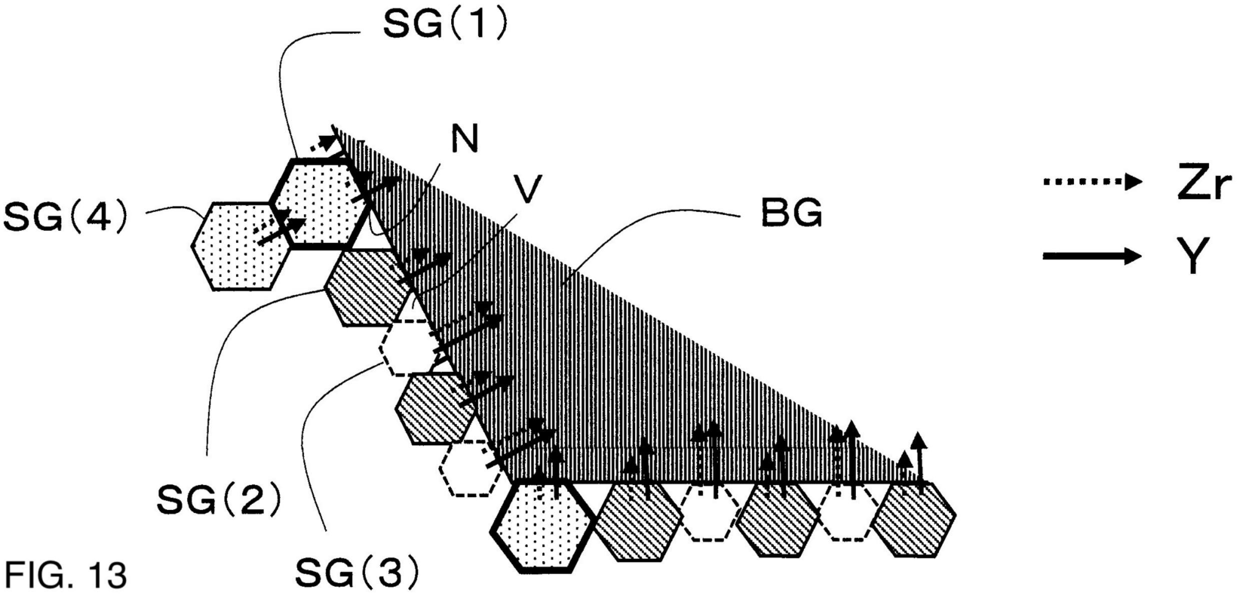


FIG. 13

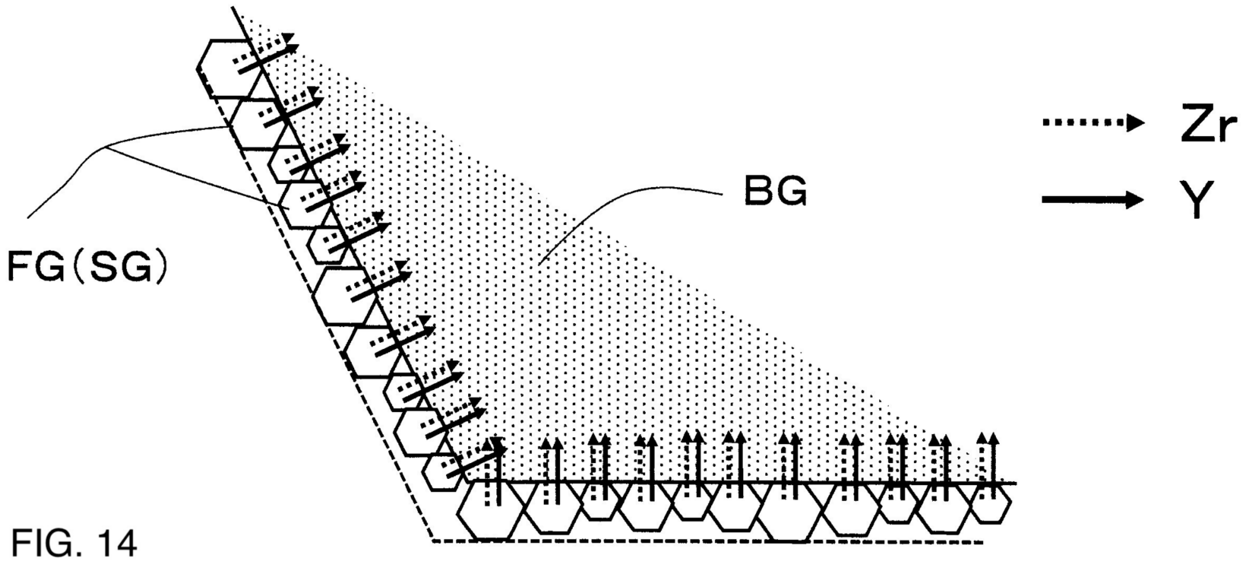


FIG. 14

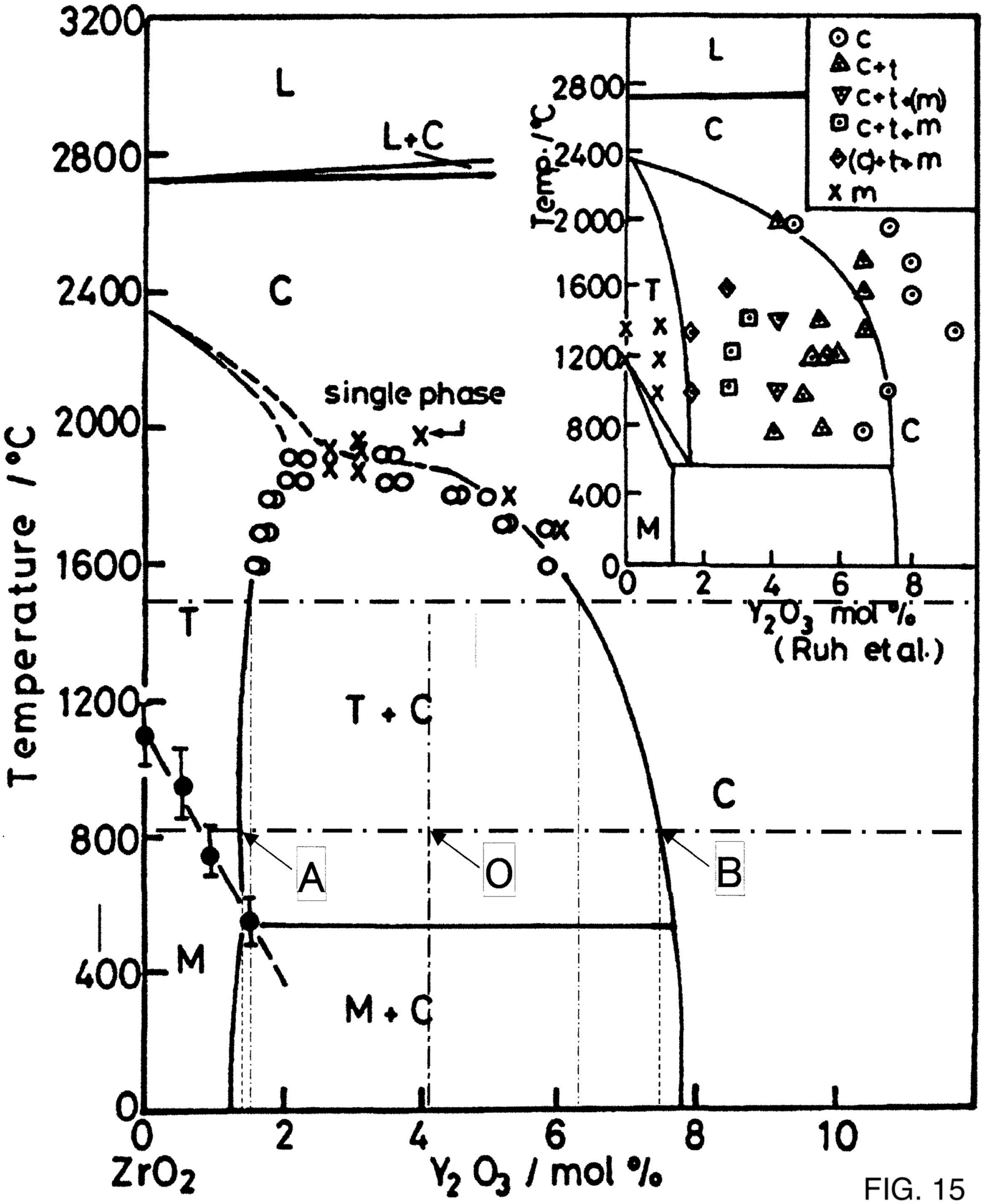
3200
2800
2400
2000
1600
1200
800
400
0
Temperature / °C
L
L+C
C
single phase
T
T + C
M
M + C
C
A
O
B
0
2
4
6
8
10
ZrO2
Y2 O3 / mol %
L
C
T
M
C
Temp. / °C
2800
2400
2000
1600
1200
800
400
0
0
2
4
6
8
Y2O3 mol %
(Ruh et al.)
c
c+t
c+t+(m)
c+t+m
(c)+t+m
m

FIG. 15

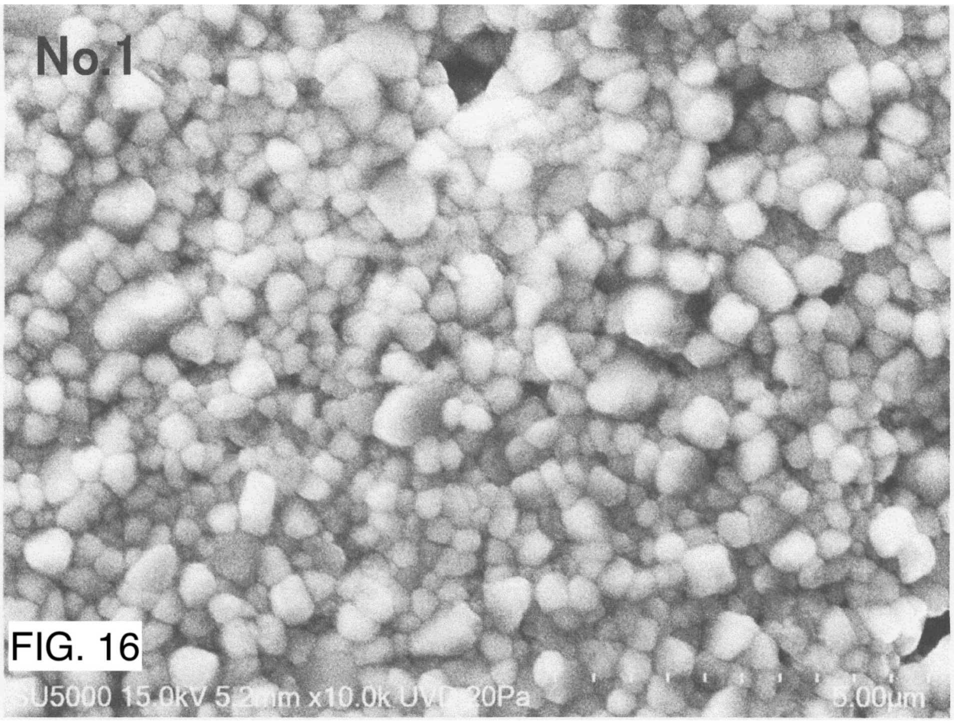


FIG. 16

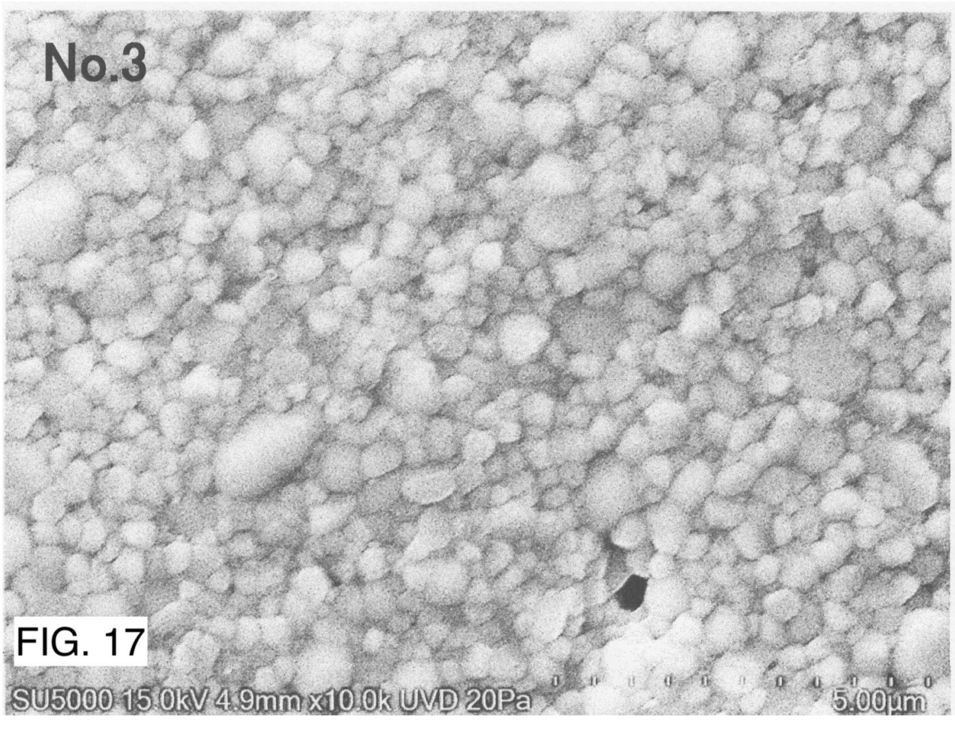

FIG. 17

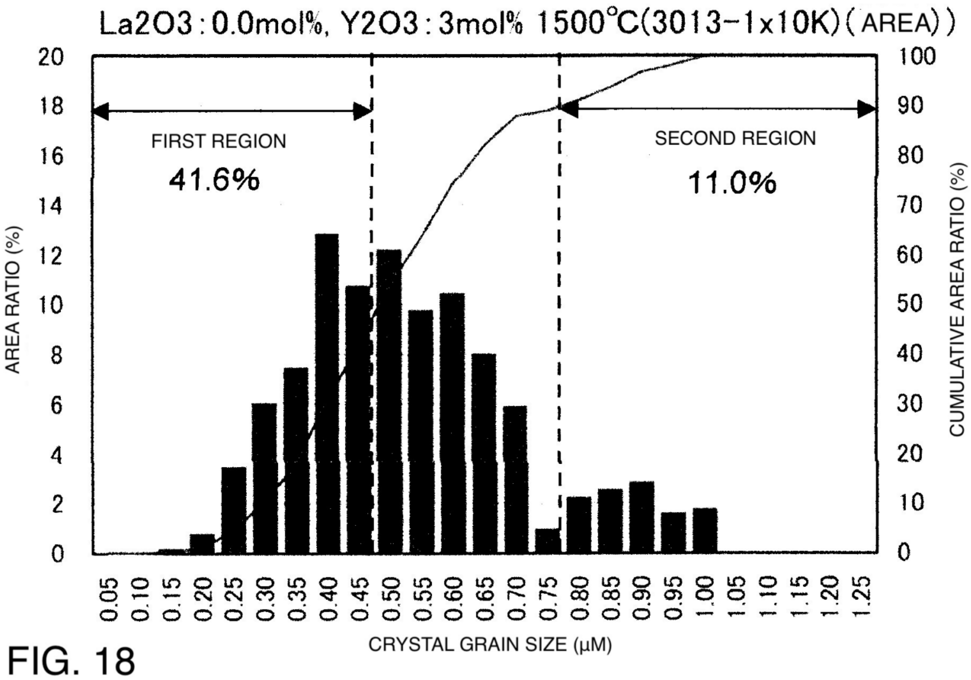

La2O3:0.0mol%, Y2O3:3mol% 1500°C(3013-1x10K)(AREA))
AREA RATIO (%)
CUMULATIVE AREA RATIO (%)
FIRST REGION
41.6%
SECOND REGION
11.0%
0
2
4
6
8
10
12
14
16
18
20
0
10
20
30
40
50
60
70
80
90
100
0.05
0.10
0.15
0.20
0.25
0.30
0.35
0.40
0.45
0.50
0.55
0.60
0.65
0.70
0.75
0.80
0.85
0.90
0.95
1.00
1.05
1.10
1.15
1.20
1.25
CRYSTAL GRAIN SIZE (μM)


FIG. 18

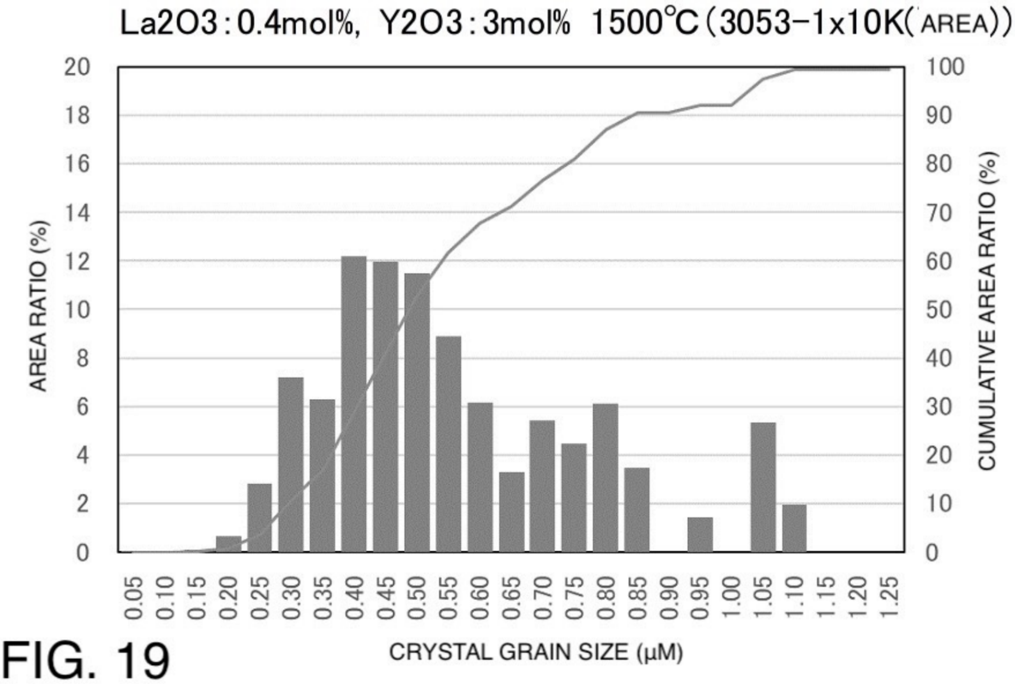
La2O3 : 0.4mol%, Y2O3 : 3mol% 1500°C (3053-1x10K(AREA))
AREA RATIO (%)
CUMULATIVE AREA RATIO (%)
0
2
4
6
8
10
12
14
16
18
20
0
10
20
30
40
50
60
70
80
90
100
0.05
0.10
0.15
0.20
0.25
0.30
0.35
0.40
0.45
0.50
0.55
0.60
0.65
0.70
0.75
0.80
0.85
0.90
0.95
1.00
1.05
1.10
1.15
1.20
1.25
CRYSTAL GRAIN SIZE (μM)

FIG. 19

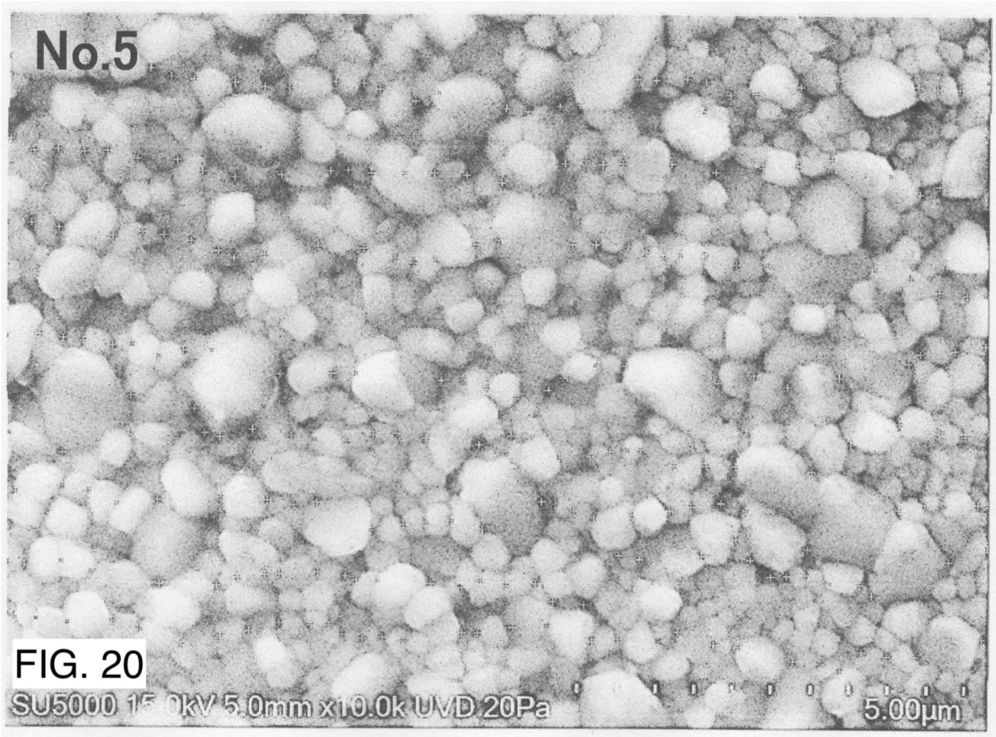

FIG. 20

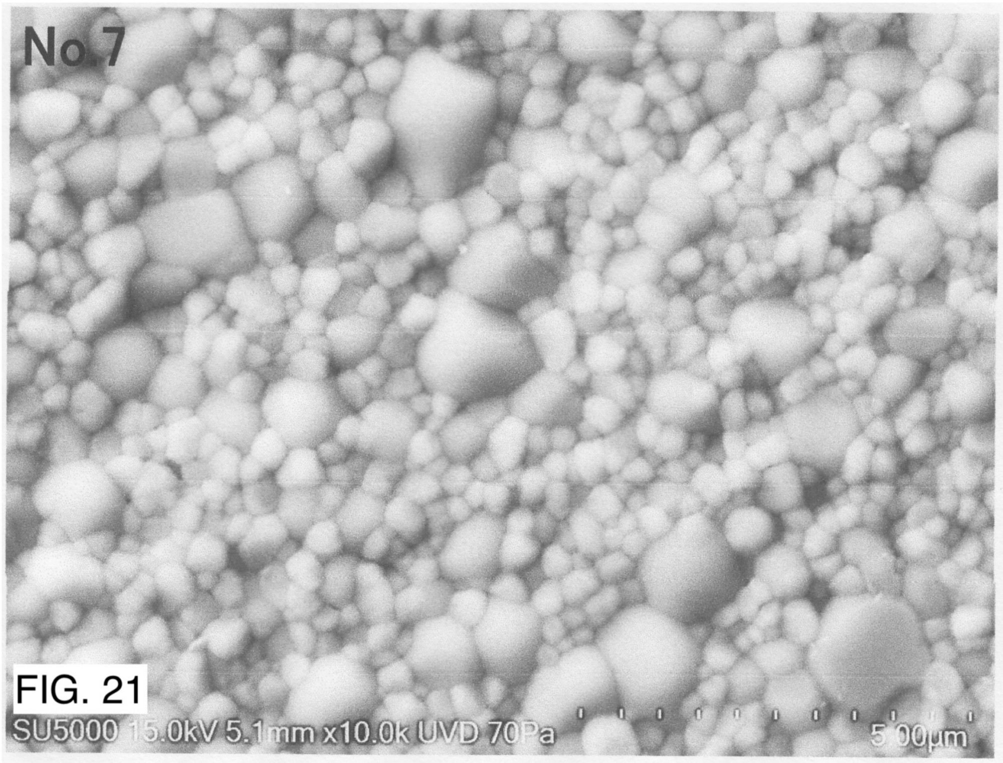

FIG. 21

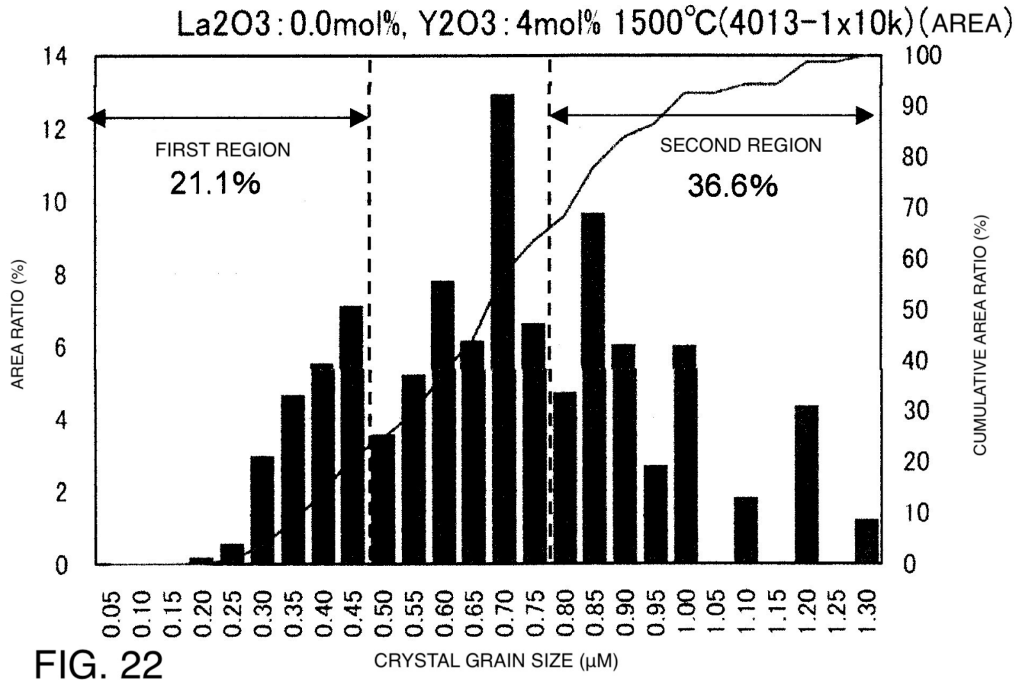
La2O3:0.0mol%, Y2O3:4mol% 1500°C(4013-1x10k)(AREA)
FIRST REGION
21.1%
SECOND REGION
36.6%
AREA RATIO (%)
CUMULATIVE AREA RATIO (%)
CRYSTAL GRAIN SIZE (μM)
0
2
4
6
8
10
12
14
0
10
20
30
40
50
60
70
80
90
100
0.05
0.10
0.15
0.20
0.25
0.30
0.35
0.40
0.45
0.50
0.55
0.60
0.65
0.70
0.75
0.80
0.85
0.90
0.95
1.00
1.05
1.10
1.15
1.20
1.25
1.30

FIG. 22

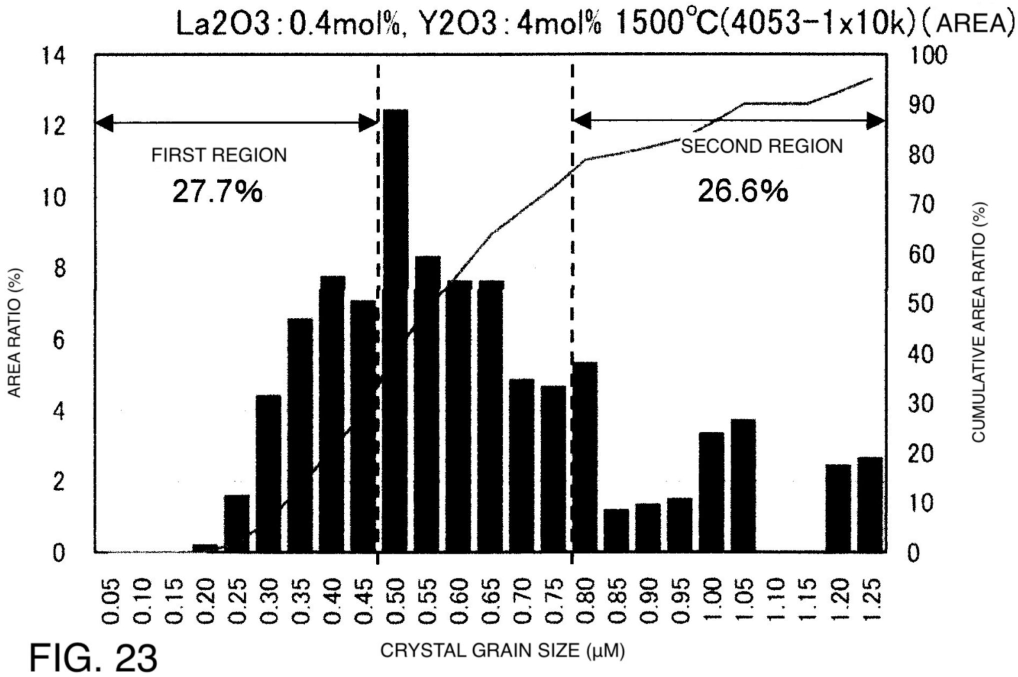
La2O3:0.4mol%, Y2O3:4mol% 1500°C(4053-1x10k)(AREA)
FIRST REGION
27.7%
SECOND REGION
26.6%
AREA RATIO (%)
CUMULATIVE AREA RATIO (%)
0
2
4
6
8
10
12
14
0
10
20
30
40
50
60
70
80
90
100
0.05
0.10
0.15
0.20
0.25
0.30
0.35
0.40
0.45
0.50
0.55
0.60
0.65
0.70
0.75
0.80
0.85
0.90
0.95
1.00
1.05
1.10
1.15
1.20
1.25
CRYSTAL GRAIN SIZE (μM)

FIG. 23

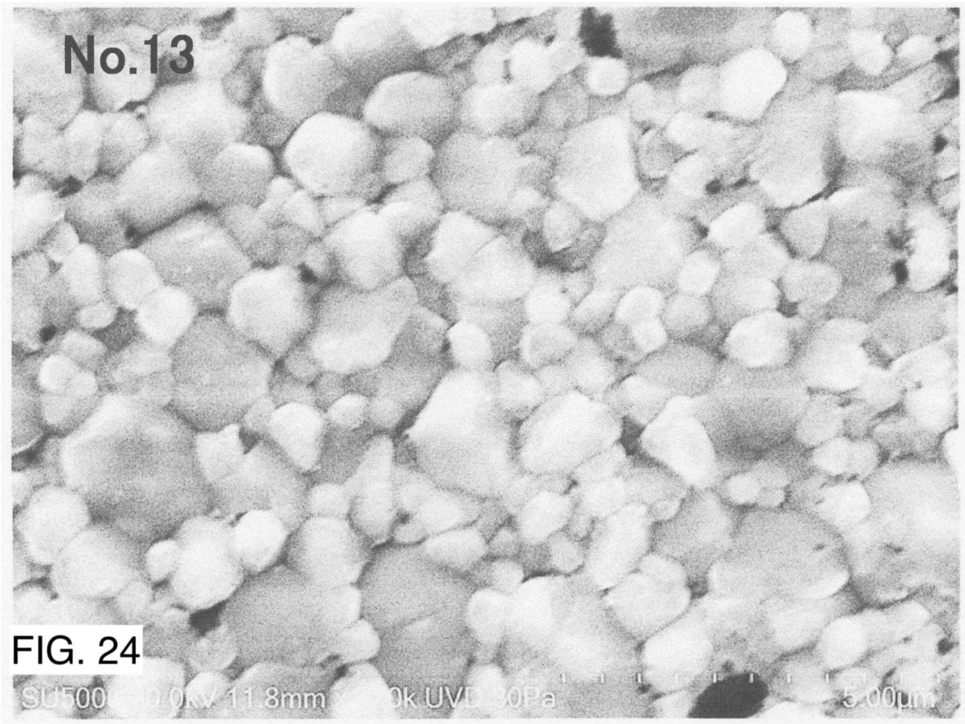


FIG. 24

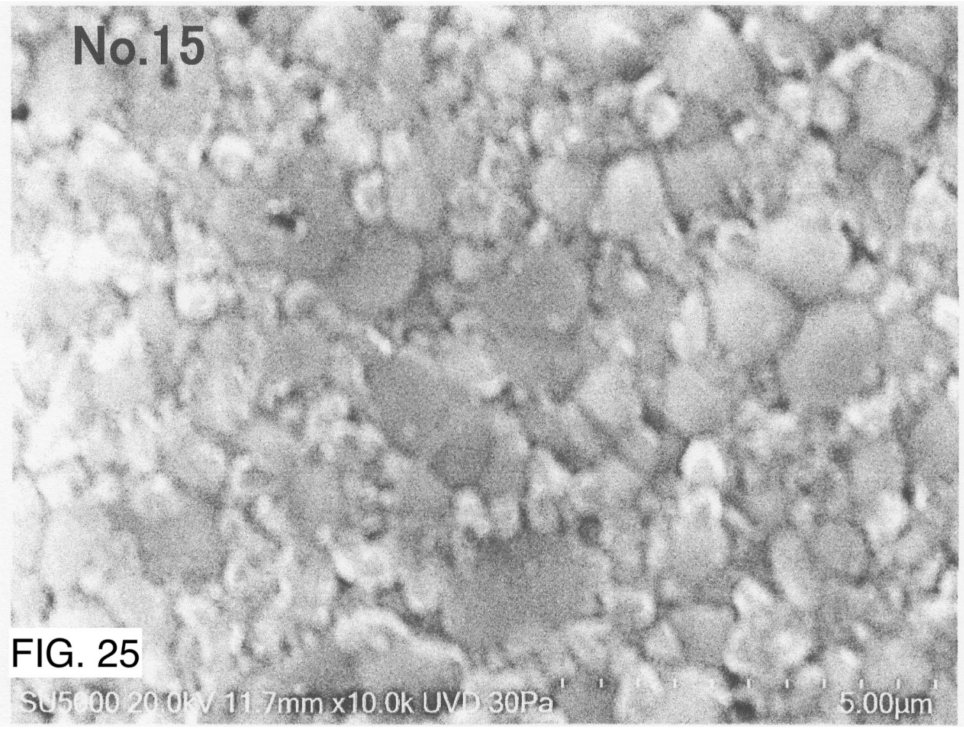


FIG. 25

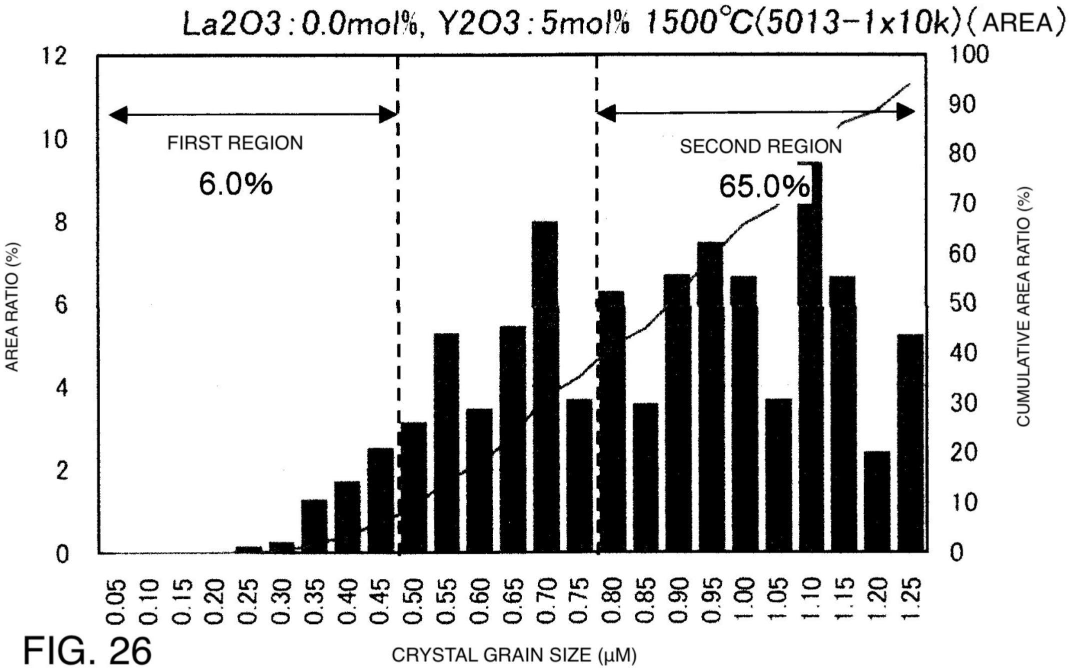
La2O3 : 0.0mol%, Y2O3 : 5mol% 1500°C(5013-1x10k) (AREA)
FIRST REGION
6.0%
SECOND REGION
65.0%
AREA RATIO (%)
CUMULATIVE AREA RATIO (%)
CRYSTAL GRAIN SIZE (μM)
0 2 4 6 8 10 12
0 10 20 30 40 50 60 70 80 90 100
0.05 0.10 0.15 0.20 0.25 0.30 0.35 0.40 0.45 0.50 0.55 0.60 0.65 0.70 0.75 0.80 0.85 0.90 0.95 1.00 1.05 1.10 1.15 1.20 1.25

FIG. 26

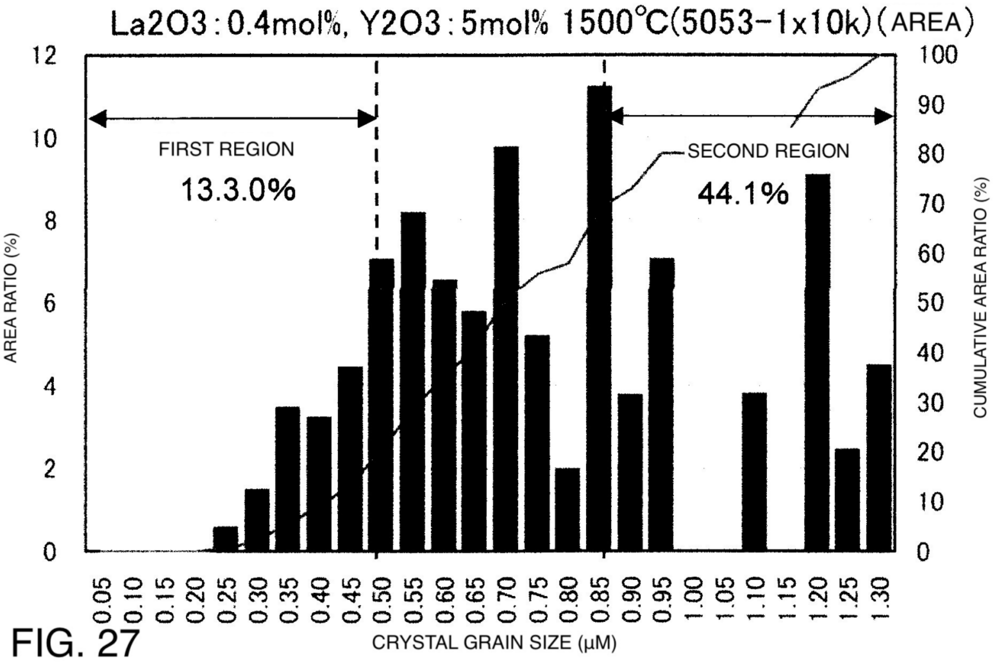
La2O3:0.4mol%, Y2O3:5mol% 1500°C(5053-1x10k)(AREA)
AREA RATIO (%)
CUMULATIVE AREA RATIO (%)
FIRST REGION
13.3.0%
SECOND REGION
44.1%
CRYSTAL GRAIN SIZE (μM)
0
2
4
6
8
10
12
0
10
20
30
40
50
60
70
80
90
100
0.05
0.10
0.15
0.20
0.25
0.30
0.35
0.40
0.45
0.50
0.55
0.60
0.65
0.70
0.75
0.80
0.85
0.90
0.95
1.00
1.05
1.10
1.15
1.20
1.25
1.30

FIG. 27

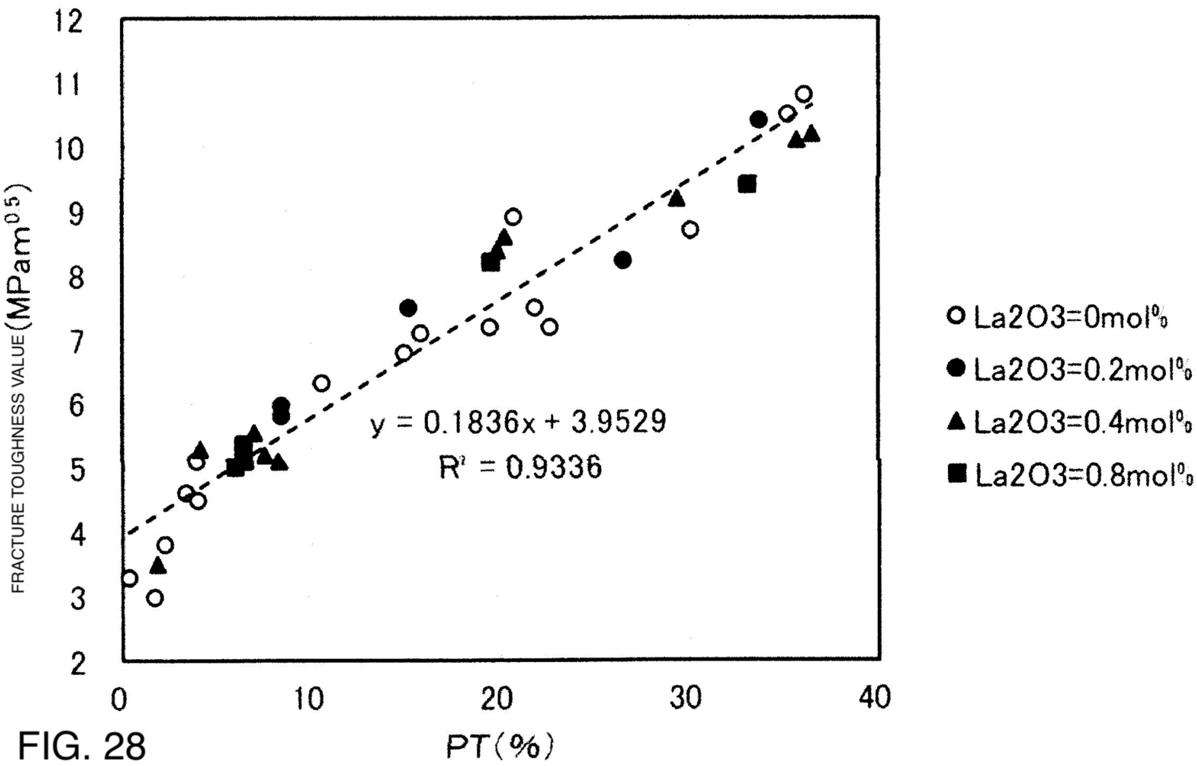
12
11
10
9
8
7
6
5
4
3
2
FRACTURE TOUGHNESS VALUE (MPam$^{0.5}$)
0
10
20
30
40
PT (%)
y = 0.1836x + 3.9529
$R^2$ = 0.9336
La2O3=0mol%
La2O3=0.2mol%
La2O3=0.4mol%
La2O3=0.8mol%

FIG. 28

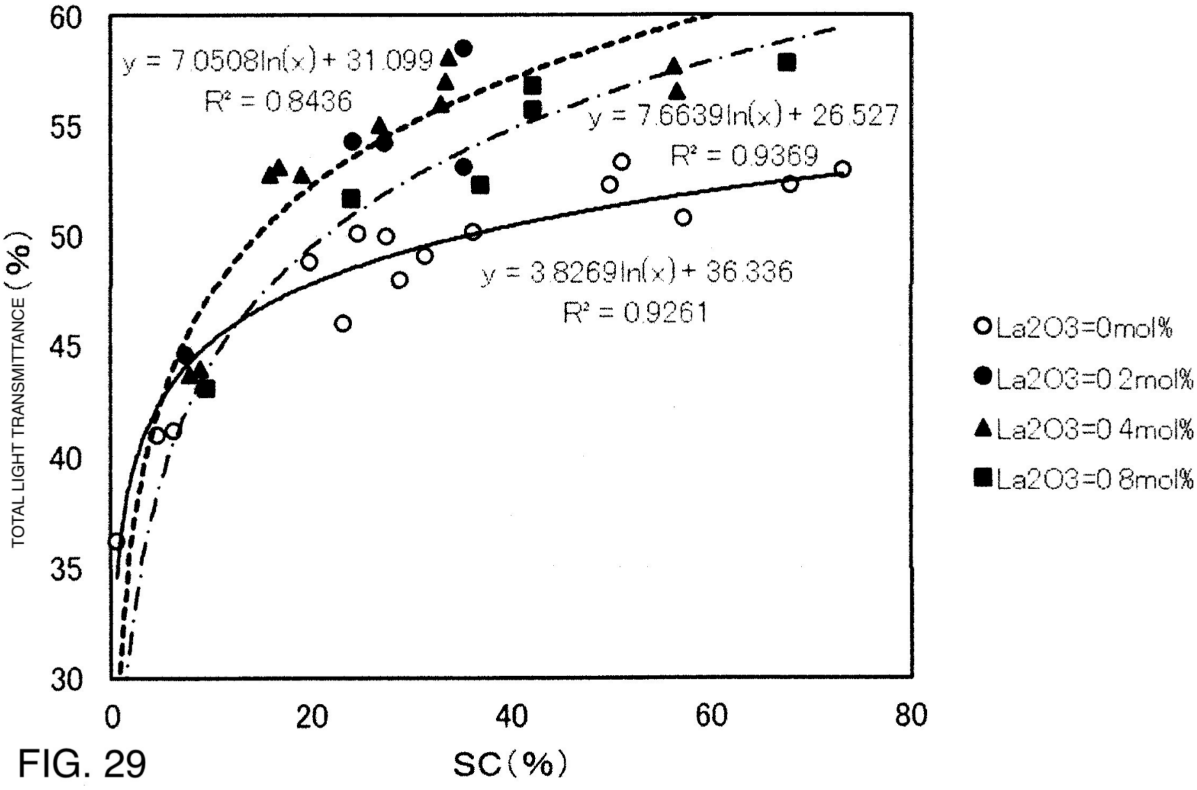
60
55
50
45
40
35
30
TOTAL LIGHT TRANSMITTANCE (%)
0
20
40
60
80
SC(%)
y = 7.0508ln(x) + 31.099
R² = 0.8436
y = 7.6639ln(x) + 26.527
R² = 0.9369
y = 3.8269ln(x) + 36.336
R² = 0.9261
La2O3=0mol%
La2O3=0.2mol%
La2O3=0.4mol%
La2O3=0.8mol%

FIG. 29

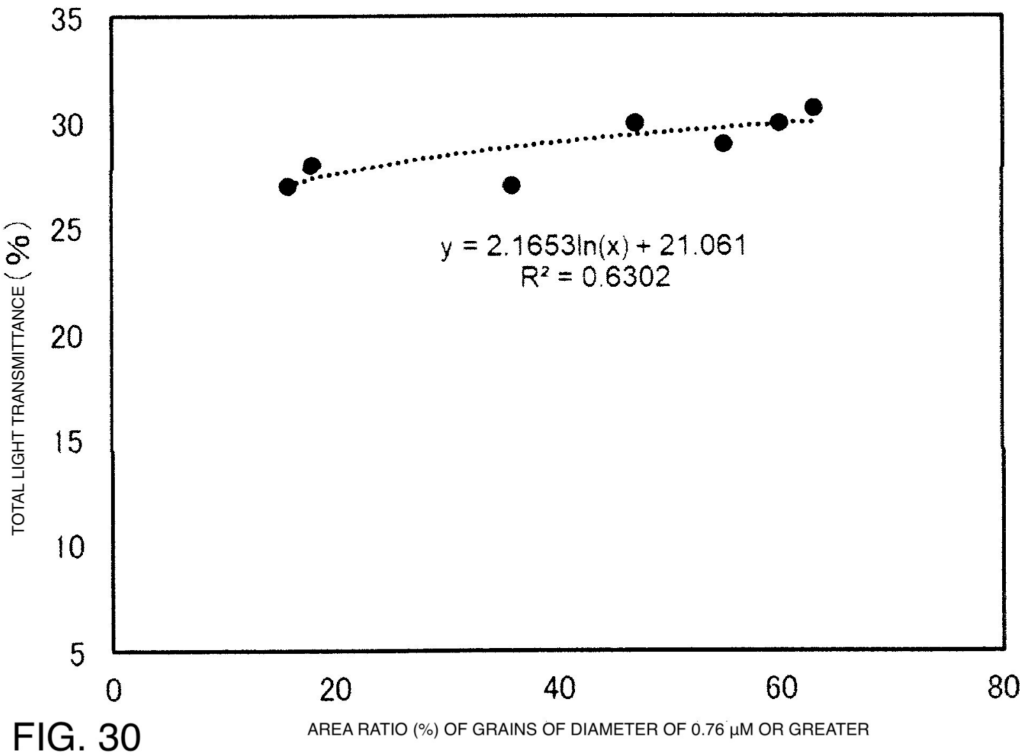
35
30
25
20
15
10
5
TOTAL LIGHT TRANSMITTANCE (%)
y = 2.1653ln(x) + 21.061
R² = 0.6302
0
20
40
60
80
AREA RATIO (%) OF GRAINS OF DIAMETER OF 0.76 μM OR GREATER

FIG. 30

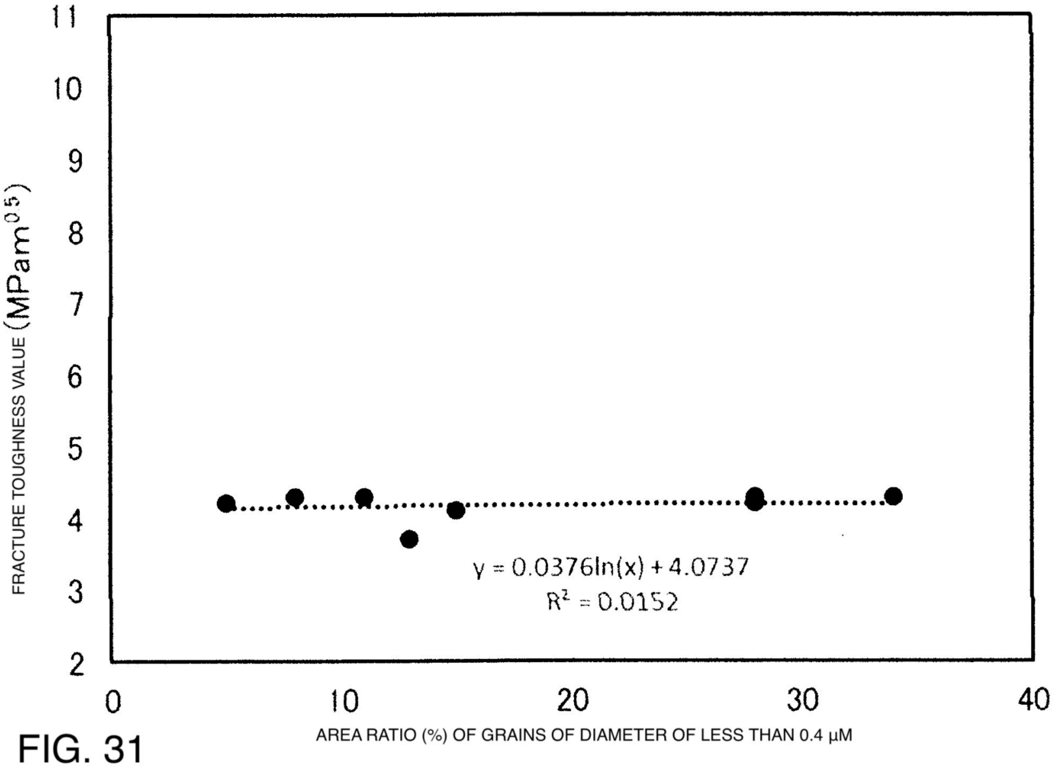
11
10
9
8
7
6
5
4
3
2
FRACTURE TOUGHNESS VALUE (MPam0.5)
y = 0.0376ln(x) + 4.0737
R² = 0.0152
0
10
20
30
40
AREA RATIO (%) OF GRAINS OF DIAMETER OF LESS THAN 0.4 μM

FIG. 31

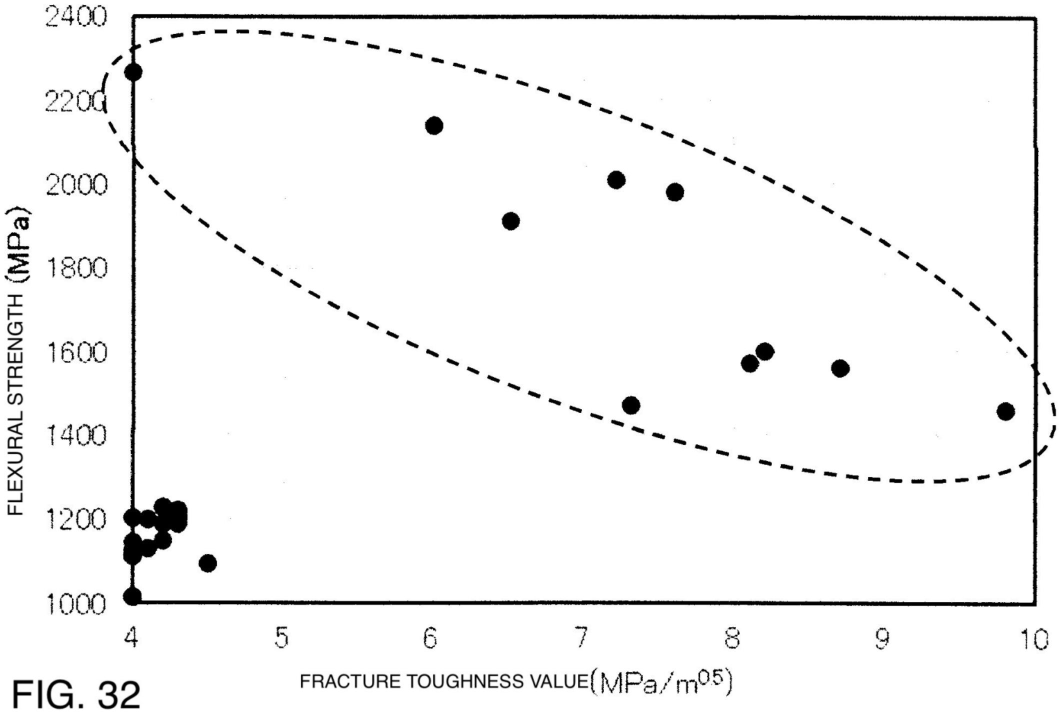
2400
2200
2000
1800
1600
1400
1200
1000
FLEXURAL STRENGTH (MPa)
4
5
6
7
8
9
10
FRACTURE TOUGHNESS VALUE(MPa/m0.5)

FIG. 32

## INTERNATIONAL SEARCH REPORT

International application No.
**PCT/JP2024/016093**

### A. CLASSIFICATION OF SUBJECT MATTER

***C04B 35/486***(2006.01)i
FI: C04B35/486

According to International Patent Classification (IPC) or to both national classification and IPC

### B. FIELDS SEARCHED

Minimum documentation searched (classification system followed by classification symbols)

C04B35/486

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2017-214266 A (TOSOH CORP.) 07 December 2017 (2017-12-07)<br>entire text | 1-13 |
| A | WO 2014/142080 A1 (KURARAY NORITAKE DENTAL INC.) 18 September 2014 (2014-09-18)<br>entire text | 1-13 |
| A | WO 2021/215419 A1 (TOSOH CORP.) 28 October 2021 (2021-10-28)<br>entire text | 1-13 |
| A | 松井光二. イットリア安定化ジルコニアの焼結メカニズム: イットリウムイオン(III)の粒界偏析効果. 東ソー研究・技術報告. 2011, vol. 55, pp. 7-18, ISSN: 1346-3039, (MATSUI, Koji. Sintering mechanism in yttria-stabilized zirconia: grain-boundary-segregation effect of yttrium (III) ions. TOSOH Research & Technology Review.)<br>entire text | 1-13 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/016093**

| Patent document cited in search report | Publication date (day/month/year) | Patent family member(s) | Publication date (day/month/year) |
|---|---|---|---|
| JP 2017-214266 A | 07 December 2017 | (Family: none) | |
| WO 2014/142080 A1 | 18 September 2014 | US 2016/0016853 A1<br>entire text<br>EP 2975011 A1<br>CN 105026337 A<br>KR 10-2015-0124969 A | |
| WO 2021/215419 A1 | 28 October 2021 | US 2023/0167028 A1<br>entire text<br>EP 4140966 A1<br>CN 115427373 A<br>KR 10-2023-0002444 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2008222450 A
- JP 2022008052 A
- JP 2010150063 A
- JP 2018165243 A

### Non-patent literature cited in the description

- State Diagram and Microstructure of Y2O3 Doped Partially Stabilized ZrO. *Journal of the Japan Institute of Metals*, 1986, vol. 50 (12), 1101-1108
- Evaluation of Physical Properties of Ultra-Translucent Zirconia. *Proceedings of the 33rd Annual Meeting of the Japanese Academy of Clinical Dentistry*, 2017, 34
- Fracture Toughness Evaluation of Zirconia (Y-TZP) by SEVNB and IF Methods. *Ann Jpn Prosthodont Soc*, 2013, vol. 5, 165-173
- Fracture Toughness Test Method for Ceramics by Indentation Fracture (IF) Method. *Synthesiology*, 2021, vol. 13 (1), 29-44
- Sintering Mechanism of Yttria Stabilized Zirconia: Effect of Yttrium Ion(III) Segregation at Grain Boundaries. *TOSOH Research & Technology Review*, 2011, vol. 55, 7-18
- Spinodal Decomposition of Ceramics. *Iron and Steel No. 73*, 1987, vol. 11, 1453-1460